# EUROPEAN PATENT SPECIFICATION

(11) **EP 3 986 049 B1**
(45) Date of publication and mention of the grant of the patent: **26.02.2025**
(21) Application number: 19932752.9
(22) Date of filing: 14.06.2019
(51) Int. Cl.: H04W 72/04, H04W 52/36

(54) **TERMINAL AND RADIO COMMUNICATION METHOD**
ENDGERÄT UND FUNKKOMMUNIKATIONSVERFAHREN
TERMINAL ET PROCÉDÉ DE COMMUNICATION RADIOÉLECTRIQUE

(43) Date of publication of application: 20.04.2022
(73) Proprietor: NTT DOCOMO, INC., Chiyoda-ku Tokyo 100-6150 (JP)
(72) Inventor: OKAMURA, Masaya, Tokyo 100-6150 (JP); MATSUMURA, Yuki, Tokyo 100-6150 (JP); HARADA, Hiroki, Tokyo 100-6150 (JP); NAGATA, Satoshi, Tokyo 100-6150 (JP)
(74) Representative: Hoffmann Eitle
(86) International application number: PCT/JP2019/023764
(87) International publication number: WO 2020/250447

(56) References cited:
- WO-A1-2015/170435
- HUAWEI ET AL: "UL MIMO full power transmission with multiple PAs", vol. RAN WG1, no. Reno, USA; 20190513 - 20190517, 13 May 2019 (2019-05-13), XP051727488, Retrieved from the Internet <URL:http://www.3gpp.org/ftp/Meetings%5F3GPP%5FSYNC/RAN1/Docs/R1%2D1906031%2Ezip> [retrieved on 20190513]
- SAMSUNG: "Enhancements on MIMO for NR", vol. TSG RAN, no. Newport Beach, USA; 20190603 - 20190607, 2 June 2019 (2019-06-02), XP051747395, Retrieved from the Internet <URL:http://www.3gpp.org/ftp/Meetings%5F3GPP%5FSYNC/RAN/Docs/RP%2D191187%2Ezip> [retrieved on 20190602]
- MEDIATEK INC: "Full Tx power UL transmission", vol. RAN WG1, no. Reno, USA; 20190513 - 20190517, 13 May 2019 (2019-05-13), XP051727989, Retrieved from the Internet <URL:http://www.3gpp.org/ftp/Meetings%5F3GPP%5FSYNC/RAN1/Docs/R1%2D1906538%2Ezip> [retrieved on 20190513]
- VIVO: "Outcome of offline discussion on Full TX Power UL transmission", 3GPP TSG RAN WG1 #97 R1- 1907886, 17 May 2019 (2019-05-17), XP051740147, Retrieved from the Internet <URL:https://www.3gpp.org/ftp/tsg_ran/WG1_RL1/TSGR1_97/Docs/Rl-1907886.zip> [retrieved on 20191202]
- OPPO: "Discussion on UL transmission mode design", 3GPP TSG RAN WG1 #90B RL-1718026, 13 October 2017 (2017-10-13), XP051341208, Retrieved from the Internet <URL:http://www.3gpp.org/ftp/tsg_ran/WG1_RL1/TSGR1_90b/Docs/Rl-1718026.zip> [retrieved on 20191202]
- NOKIA ET AL.: "UL-MIMO diversity- based transmission", 3GPP TSG RAN WG1 ADHOC_NR_AH_1709 R1-1716492, 21 September 2017 (2017-09-21), XP051339945, Retrieved from the Internet <URL:http://www.3gpp.org/ftp/tsg_ran/WG1_RL1/TSGR1_AH/NR_AH_1709/Dots/R1-1716492.zip> [retrieved on 20191202]

## Description

### Technical Field

The present disclosure relates to a terminal and a radio communication method of a next-generation mobile communication system.

### Background Art

In Universal Mobile Telecommunications System (UMTS) networks, for the purpose of higher data rates and lower latency, Long Term Evolution (LTE) has been specified (Non-Patent Literature 1). Furthermore, for the purpose of a larger capacity and higher sophistication than those of LTE (Third Generation Partnership Project (3GPP) Releases (Rel.) 8 and 9), LTE-Advanced (3GPP Rel. 10 to 14) has been specified.

LTE successor systems (also referred to as, for example, the 5th generation mobile communication system (5G), 5G+ (plus), New Radio (NR) or 3GPP Rel. 15 or subsequent releases) are also studied.

HUAWEI ET AL: "UL MIMO full power transmission with multiple PAs", 3GPP DRAFT; R1-1906031, vol. RAN WG1, no. Reno, USA; 20190513 - 20190517 13 May 2019 (2019-05-13), relates to full power transmission schemes and UE capability reporting.

SAMSUNG: "Enhancements on MIMO for NR", 3GPP DRAFT; RP-191187, vol. TSG RAN, no. Newport Beach, USA; 20190603 - 20190607 2 June 2019 (2019-06-02), relates to schemes supported for UL full power Tx for UE capability 2 and 3.

MEDIATEK INC: "Full Tx power UL transmission", 3GPP DRAFT; R1-1906538, vol. RAN WG1, no. Reno, USA; 20190513 - 20190517 13 May 2019 (2019-05-13), relates to signaling of UL full power Tx capability.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April 2010

### Summary of Invention

### Technical Problem

It is studied for a future radio communication system (e.g., NR) to support codebook-based transmission that uses a precoding matrix.

However, according to previous specifications according to Rel-15 NR, when a UE performs codebook-based transmission by using a plurality of ports, if the UE uses part of codebooks, there is a case where transmission power becomes low (full power transmission cannot be performed) compared to a single port. When, for example, a Power Amplifier (PA) connected with part of antenna ports is not a PA (full rated PA) that can output maximum rated power, there is a risk that it is not possible to perform full power transmission. When it is not possible to perform full power transmission, there is a risk that a coverage decreases, and an increase of a communication throughput is suppressed.

It is therefore one of objects of the present disclosure to provide a terminal and a radio communication method that can appropriately control full power transmission.

### Solution to Problem

The present invention is defined in the appended independent claims. Further preferred embodiments are defined in the dependent claims.

### Advantageous Effects of Invention

According to one aspect of the present disclosure, it is possible to appropriately control full power transmission.

### Brief Description of Drawings

Fig. 1 is a diagram illustrating one example of an association between a precoder type and a TPMI index.
Fig. 2 is a diagram illustrating one example of a UE configuration assumed by UE capabilities 1 to 3 related to full power transmission.
Fig. 3 is a diagram illustrating one example of UE capability information related to full power UL transmission.
Figs. 4A to 4C are diagrams illustrating one example of bitmaps that indicate a subset of TPMIs for performing full power transmission.
Figs. 5A to 5D are diagrams illustrating one example of bitmaps that indicate antenna ports including full rated PAs.
Figs. 6A and 6B are diagrams illustrating one example of mode determination according to embodiment 2-2.
Figs. 7A and 7B are diagrams illustrating one example of mode determination according to embodiment 2-3.
Figs. 8A and 8B are diagrams illustrating one example of mode determination according to embodiment 2-4.
Fig. 9 is a diagram illustrating one example of a schematic configuration of a radio communication system according to one embodiment.
Fig. 10 is a diagram illustrating one example of a configuration of a base station according to the one embodiment.
Fig. 11 is a diagram illustrating one example of a configuration of a user terminal according to the one embodiment.
Fig. 12 is a diagram illustrating one example of hardware configurations of the base station and the user terminal according to the one embodiment.

### Description of Embodiments

### (PUSCH Precoder)

It is studied for NR that a UE supports at least one of Codebook (CB)-based transmission and Non-Codebook (NCB)-based transmission.

For example, it is studied to decide a precoder (precoding matrix) for at least one of CB-based and NCB-based uplink shared channel (Physical Uplink Shared Channel (PUSCH)) transmission by using at least a Sounding Reference Signal (SRS) Resource Index (SRS Resource Index (SRI)).

In a case of CB-based transmission, the UE may determine a precoder for PUSCH transmission based on, for example, an SRI, a Transmitted Rank Indicator (TRI) and a Transmitted Precoding Matrix Indicator (TPMI). In a case of NCB-based transmission, the UE may determine a precoder for PUSCH transmission based on an SRI.

For example, the SRI, the TRI and the TPMI may be notified to the UE by using Downlink Control Information (DCI). The SRI may be indicated by an SRS Resource Indicator field (SRI field) of the DCI, or may be indicated by a parameter "srs-ResourceIndicator" included in an RRC information element "ConfiguredGrantConfig" of a configured grant PUSCH. The TRI and the TPMI may be indicated by a "precoding information and number of layers" field of the DCI.

The UE may report UE capability information related to a precoder type, and a base station may configure the precoder type that is based on the UE capability information to the UE by a higher layer signaling. The UE capability information may be information (that may be expressed as an RRC parameter "pusch-TransCoherence") of the precoder type that the UE uses for PUSCH transmission.

In the present disclosure, a higher layer signaling may be one or a combination of, for example, a Radio Resource Control (RRC) signaling, a Medium Access Control (MAC) signaling and broadcast information.

The MAC signaling may use, for example, an MAC Control Element (MAC CE) or an MAC Protocol Data Unit (PDU). The broadcast information may be, for example, a Master Information Block (MIB) and a System Information Block (SIB).

The UE may determine a precoder used for PUSCH transmission based on information (that may be expressed as an RRC parameter "codebookSubset") of a precoder type included in PUSCH configuration information (a "PUSCH-Config" information element of an RRC signaling) notified by a higher layer signaling. A subset of PMIs indicated by TPMIs may be configured to the UE by codebookSubset.

In this regard, the precoder type may be indicated by one or a combination of at least two of fully coherent (full coherent or coherent), partial coherent and non coherent (that may be expressed as parameters such as fully and partial and non coherent (fullyAndPartialAndNonCoherent) and partial and non coherent (partialAndNonCoherent)).

Fully coherent may mean that synchronization between all antenna ports used for transmission is established (which may be expressed as that phases can be matched or that precoders to be applied are the same). Partial coherent may mean that synchronization is established between part of ports of antenna ports used for transmission, yet synchronization cannot be established between the part of ports and other ports. Non coherent may mean that synchronization between each antenna port used for transmission cannot be established.

In addition, it may be assumed that the UE that supports a precoder type of fully coherent supports precoder types of partial coherent and non coherent. It may be assumed that the UE that supports the precoder type of partial coherent supports the precoder type of non coherent.

The precoder type may be read as, for example, coherency, PUSCH transmission coherence, a coherent type, a coherence type, a codebook type, a codebook subset and a codebook subset type.

The UE may determine from a plurality of precoders (that may be referred to as, for example, precoding matrices or codebooks) for CB-based transmission a precoding matrix associated with a TPMI index that can be obtained from DCI for scheduling UL transmission.

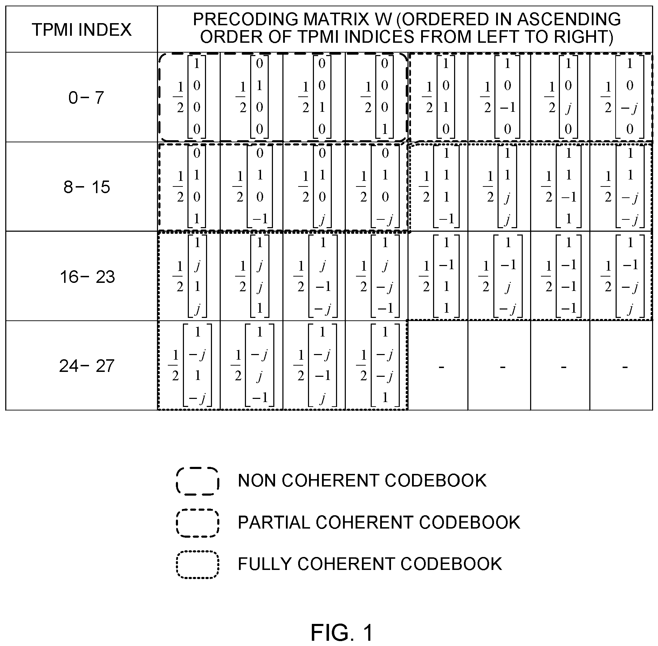

Fig. 1 is a diagram illustrating one example of an association between a precoder type and a TPMI index. Fig. 1 corresponds to a table of a precoding matrix W for single layer transmission that uses 4 antenna ports according to Discrete Fourier Transform spread OFDM (DFT-s-OFDM where transform precoding is enabled).

In a case where a precoder type (codebookSubset) is fully and partial and non coherent (fullyAndPartialAndNonCoherent) in Fig. 1, the UE is notified of a TPMI that is one of 0 to 27 for single layer transmission. Furthermore, in a case where a precoder type is partial and non coherent (partialAndNonCoherent), a TPMI that is one of 0 to 11 is configured to the UE for single layer transmission. In a case where a precoder type is non coherent (nonCoherent), a TPMI that is one of 0 to 3 is configured to the UE for single layer transmission.

Fig. 1 illustrates a table that is specified in current Rel-15 NR. According to this table, when transmission power of fully coherent corresponding to indices 12 to 27 is 1(= (1/2)² * 4), transmission power of partial coherent corresponding to indices 4 to 11 is 1/2(= (1/2)² * 2), and transmission power of non coherent corresponding to indices 0 to 3 is 1/4(= (1/2)² * 1).

That is, according to a specification of current Rel-15 NR, when the UE performs codebook-based transmission by using a plurality of ports, if the UE uses part of codebooks, there is a case where transmission power becomes low compared to a single port (full power transmission cannot be performed).

In addition, as illustrated in Fig. 1, a precoding matrix whose only one component of each column is not 0 may be referred to as a non coherent codebook. A precoding matrix whose only given number (not all) of components of each column are not 0 may be referred to as a partial coherent codebook. A precoding matrix whose all components of each column are not 0 may be referred to as a fully coherent codebook.

In addition, according to the present disclosure, the partial coherent codebook may correspond to codebooks (i.e., codebooks of TPMIs = 4 to 11 in a case of single layer transmission of 4 antenna ports) except codebooks associated with TPMIs indicated to the UE to which a non coherent codebook subset (e.g., RRC parameter "codebookSubset" = "nonCoherent") has been configured among codebooks (precoding matrices) associated with TPMIs indicated by DCI for codebook-based transmission to the UE to which a partial coherent codebook subset (e.g., RRC parameter "codebookSubset" = "partialAndNonCoherent") has been configured.

In addition, according to the present disclosure, the fully coherent codebook may correspond to codebooks (i.e., codebooks of TPMIs = 12 to 27 in a case of single layer transmission of 4 antenna ports) except codebooks associated with TPMIs indicated to the UE to which a partial coherent codebook subset (e.g., RRC parameter "codebookSubset" = "partialAndNonCoherent") has been configured among codebooks (precoding matrices) associated with TPMIs indicated by DCI for codebook-based transmission to the UE to which a fully coherent codebook subset (e.g., RRC parameter "codebookSubset" = "fullyAndPartialAndNonCoherent") has been configured.

### (UE Capability of Full Power Transmission)

Even when a codebook is used, it is preferable to appropriately perform full power UL transmission. Hence, according to NR, UE capability related to codebook-based full power UL transmission that uses a plurality of Power Amplifiers (PAs)) has been studied. An argument on NR made so far proposes following UE capabilities 1 to 3:
·UE capability 1: Each transmission chain (Tx chain) supports (includes) a PA (full rated PA) that can output maximum rated power,
·UE capability 2: No transmission chain supports the full rated PA, and
·UE capability 3: A subset (part) of transmission chains support the full rated PAs.

In addition, the UE that has at least one of the UE capabilities 1 to 3 may mean that the UE supports full power of UL transmission. The UE may report capability information that indicates that the UE supports UL full power transmission capability in addition to the UE capabilities 1 to 3 to a network (e.g., base station). The UE may be configured by the network to support full power transmission.

The UE capabilities 1/2/3 may be each read as, for example, the UE capability 1/2/3 related to full power transmission, full power transmission type 1/2/3 and power allocation type 1/2/3. In the present disclosure, for example, the type, the mode and the capability may be interchangeably read. Furthermore, in the present disclosure, 1/2/3 may be read as a set of arbitrary numbers or characters such as A/B/C.

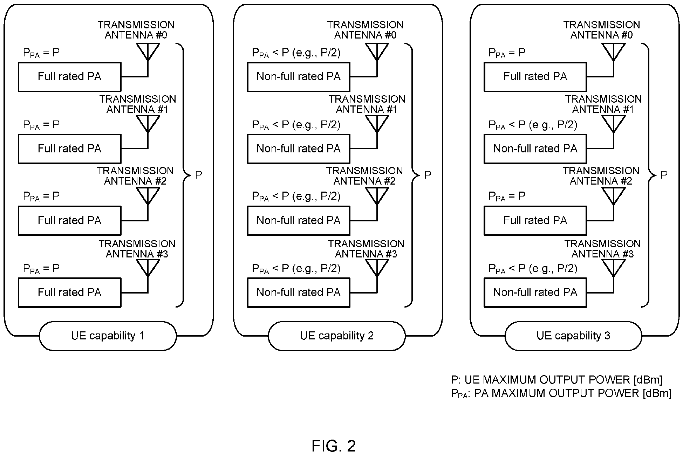

Fig. 2 is a diagram illustrating one example of a UE configuration assumed by the UE capabilities 1 to 3 related to full power transmission. Fig. 2 schematically illustrates only PAs and transmission antenna ports (that may be read as transmission antennas) as a UE configuration. In addition, Fig. 2 illustrates an example where the numbers of the PAs and the transmission antenna ports are each 4. However, the numbers of the PAs and the transmission antenna ports are not limited to this.

In addition, P represents UE maximum output power [dBm], and P_{PA} represents PA maximum output power [dBm]. In addition, P may be, for example, 23 dBm in a case of the UE of power class 3, and 26 dBm in a case of the UE of power class 2. The present disclosure assumes P_{PA} ≤ P. However, embodiments of the present disclosure may be applied to a case of P_{PA} > P.

Although implementation of a configuration of the UE capability 1 is assumed to be costly, the configuration of the UE capability 1 enables full power transmission by using one or more arbitrary antenna ports. A configuration of the UE capability 2 includes only non-full rated PAs, and is expected to be able to be implemented at low cost. However, the configuration of the UE capability 2 does not enable full power transmission by using only one antenna port, and therefore is demanded to control, for example, a phase and an amplitude of a signal to be input to each PA.

The configuration of the UE capability 3 is a middle of the configuration of the UE capability 1 and the configuration of the UE capability 2. The configuration of the UE capability 3 includes antenna ports (transmission antennas #0 and #2 in this example) that can perform full power transmission, and antenna ports (antennas #1 and #3 in this example) that cannot perform full power transmission in a mixed manner.

In addition, indices and the number of antenna ports of the UE capability 3 that can perform full power transmission are not limited to these. Furthermore, this example assumes P_{PA} = P/2 of the non-full rated PA. However, the value of P_{PA} is not limited to this.

By the way, it is studied to configure at least one of two modes (modes 1 and 2) of a full power transmission operation to the UE that supports the UE capability 2 or 3. The modes 1 and 2 may be referred to as, for example, operation modes 1 and 2, respectively.

In this regard, the mode 1 may be a mode (that may be referred to as, for example, a first full power transmission mode) that the UE is configured such that one or a plurality of SRS resources included in one SRS resource set whose usage is a "codebook" have the same numbers of SRS ports. The UE that operates in the mode 1 may perform full power transmission by using all antenna ports.

The UE that operates in the mode 1 may be configured by the network to use a subset of TPMIs that connect ports in 1 layer for realizing full power transmission. A new codebook subset may be introduced only to a rank value that includes a TPMI precoder associated with "fullyAndPartialAndNonCoherent" defined by Rel-15 NR and cannot be used for full power transmission.

On the other hand, the mode 2 may be a mode (that may be referred to as, for example, a second full power transmission mode) that the UE is configured such that one or a plurality of SRS resources included in one SRS resource set whose usage is the "codebook" have different numbers of SRS ports. The UE that operates in the mode 2 may perform full power transmission by using part of antenna ports instead of all antenna ports.

The UE that operates in the mode 2 may transmit a PUSCH and an SRS by the same method irrespectively of whether or not antenna virtualization is used. The UE in the mode 2 may be notified to a set of TPMIs for realizing full power transmission to support SRS resources whose numbers of ports is larger than 1. In a case of the mode 2, two or three (two at maximum in a case of Rel-15 NR) SRS resources may be configured per SRS resource set.

Compared to the mode 2, the mode 1 has an advantage that a small necessary SRI field size is sufficient (full power transmission can be performed using 1 SRS resource).

Compared to the mode 1, the mode 2 has an advantage that it is possible to dynamically switch between single port transmission and multi-port transmission by using DCI. Furthermore, it is possible to perform full power transmission at part of antenna ports, so that, for example, it is possible to perform full power transmission by using only antennas including full rated PAs, or perform full power transmission by using only coherent antennas.

However, even in a case where the UE can operate in the mode 2, if the UE does not report to the network which TPMI (or antenna port) the UE can use to perform full power transmission, the network cannot appropriately control UL scheduling of the UE. Furthermore, in a case where the UE supports a plurality of modes, study on how to decide which mode to use to perform PUSCH transmission has not yet advanced.

Unless a method for realizing these control and decision is clearly specified, the UE cannot appropriately perform full power transmission. When full power transmission cannot be performed, there is a risk that a coverage decreases, and an increase of a communication throughput is suppressed.

Hence, the inventors of the present disclosure have conceived a control method for appropriately performing full power transmission. According to one aspect of the present disclosure, it is possible to perform UL Multi Input Multi Output (MIMO) transmission at full power, and maintain a cell coverage similar to that of a single antenna. Furthermore, UL MIMO makes it possible to obtain a spatial diversity gain and expect improvement of a throughput. Furthermore, even the UE that does not include full rated PAs can appropriately perform full power transmission.

The embodiments according to the present disclosure will be described in detail below with reference to the drawings. A radio communication method according to each embodiment may be each applied alone or may be applied in combination.

In addition, an "antenna" and an "antenna port" in the following embodiments may be interchangeably read.

In the present disclosure, "full power" may be read as, for example, "power boosting", "maximum power", "enhanced power" and "high power compared to a Rel-15 UE".

Furthermore, according to the present disclosure, that the UE has UE capability X (X = 1, 2 and 3) may be interchangeably read as, for example, that the UE reports the UE capability X or that the UE can perform full power transmission by using a configuration of the UE capability X.

According to the present disclosure, that the UE has capability related to coherent (e.g., fully coherent, partial coherent and non coherent) may be interchangeably read as, for example, that the UE reports the capability or that the UE is configured with the coherent.

Furthermore, the non coherent UE, the partial coherent UE and the fully coherent UE may be interchangeably read as a UE that has capability related to non coherent, a UE that has capability related to partial coherent, and a UE that has capability related to fully coherent, respectively.

Furthermore, the non coherent UE, the partial coherent UE and the fully coherent UE may each mean a UE to which "non coherent (nonCoherent)", "partial and non coherent (partialAndNonCoherent)" and "fully and partial and non coherent (fullyAndPartialAndNonCoherent)" codebook subsets are configured by a higher layer. In addition, according to the present disclosure, a codebook subset and a codebook may be interchangeably read.

Furthermore, the non coherent UE, the partial coherent UE and the fully coherent UE may each mean a UE that can perform transmission by using a non coherent codebook, a partial coherent codebook and a fully coherent codebook.

### (Radio Communication Method)

### <First Embodiment>

The first embodiment relates to UE capability information that is reported to a network in a case where a UE supports full power UL transmission.

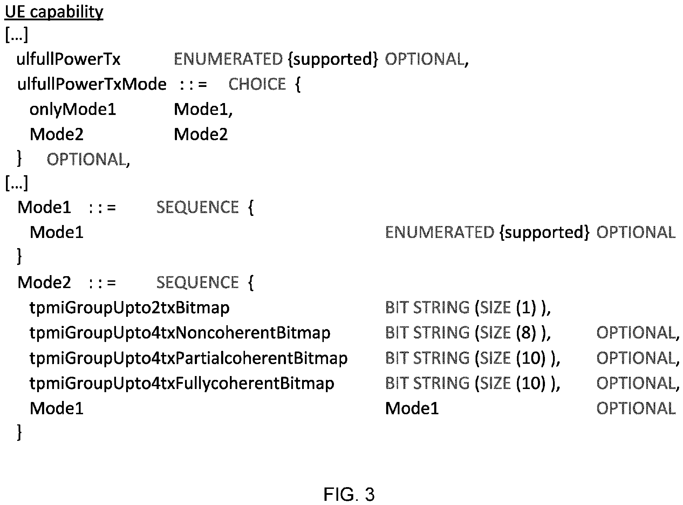

This UE capability information may include a stepwise configuration. Fig. 3 is a diagram illustrating one example of UE capability information related to full power UL transmission. Fig. 3 is illustrated by using an Abstract Syntax Notification One (ASN.1) notation (in this regard, the illustration is just an example, and therefore is not a complete illustration). In addition, an RRC parameter name is not limited to an indicated name.

In a case where the UE has UE capability 1, the UE only needs to set to "supported" a value of an RRC parameter "ulfullPowerTx" that indicates whether or not the UE supports full power and report the value.

In a case where the UE has UE capability 2 or 3, the UE only needs to report another RRC parameter "ulfullPowerTxMode" related to a mode in addition to "ulfullPowerTx" or instead of "ulfullPowerTx".

The UE that supports only a mode 1 only needs to report as "ulfullPowerTxMode" an RRC parameter "onlyMode1" that indicates whether or not the UE supports the mode 1.

The UE that supports only a mode 2 only needs to report as "ulfullPowerTxMode" an RRC parameter "Mode2" that indicates whether or not the UE supports the mode 2. In addition, the UE that supports only the mode 2 only needs to report "Mode2" that does not include "Mode1", and the UE that supports both of the modes 1 and 2 only needs to report "Mode2" that includes "Mode1".

In addition, "Mode2" may include capability related to a subset of TPMIs for performing full power transmission. For example, "tpmiGroupUpto2txBitmap" in Fig. 3 may mean a 1-bit bit sequence (bitmap) that indicates a TPMI (that may be read as a precoding matrix below) that indicates that the UE can perform full power transmission at part of ports (i.e., 1 port) for transmission at up to 2 ports.

"tpmiGroupUpto4txNoncoherentBitmap" in Fig. 3 may mean an 8-bit bit sequence that indicates a TPMI that indicates that a non coherent UE can perform full power transmission at part of ports (i.e., 3 ports or less) for transmission at up to 4 ports.

"tpmiGroupUpto4txPartialcoherentBitmap" in Fig. 3 may mean a 10- bit bit sequence that indicates a TPMI that indicates that a partial coherent UE can perform full power transmission at part of ports (i.e., 3 ports or less) for transmission at up to 4 ports.

"tpmiGroupUpto4txFullycoherentBitmap" in Fig. 3 may mean a 10- bit bit sequence that indicates a TPMI that indicates that a fully coherent UE can perform full power transmission at part of ports (i.e., 3 ports or less) for transmission at up to 4 ports.

In addition, the bitmaps included in the above UE capability information are not limited to these. The above UE capability information may include, for example, a bitmap for full power transmission that uses more than 4 antenna ports.

The UE may assume that only one of bits included in these bit sequences can become '1', or that a plurality of bits included therein can become '1'.

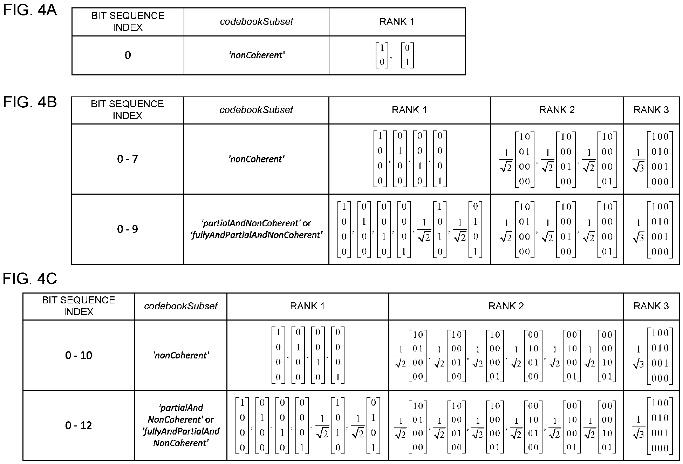

Figs. 4A to 4C are diagrams illustrating one example of bitmaps that indicate a subset of TPMIs for performing full power transmission. Fig. 4A illustrates a case of 2 port transmission. In this case, the UE is one of the non coherent UE and the fully coherent UE. In a case of the mode 2, the UE performs full power transmission (rank 1) by using only one antenna port, and therefore a TPMI for full power transmission can be indicated as "tpmiGroupUpto2txBitmap" by only 1 bit.

When, for example, this 1 bit (bit sequence index = bit of 0) is '0', [1 0]^{T} (T represents a transpose of a matrix, which applies likewise below) may be indicated as a codebook (precoding matrix). When this 1 bit is '1', a matrix [0 1]^{T} may be indicated as a codebook.

In addition, if "tpmiGroupUpto2txBitmap" is expressed by 2 bits, and it is assumed that, when a bit sequence index 0 (e.g., most significant bit) is '1', the matrix [0 1]^{T} is indicated, and, when a bit sequence index 1 is '1', the matrix [0 1]^{T} is indicated, the UE may assume that both of the bit 0 and the bit 1 are not configured to '1' (this is because it can be said that the UE corresponds to the fully coherent UE in this case).

Fig. 4B illustrates a case of 4 port transmission. An upper row (bit sequence indices = 0 to 7) of this table may correspond to "tpmiGroupUpto4txNoncoherentBitmap", and a lower row (bit sequence indices = 0 to 9) of this table may correspond to "tpmiGroupUpto4txPartialcoherentBitmap" and "tpmiGroupUpto4txFullycoherentBitmap".

For example, in "tpmiGroupUpto4txNoncoherentBitmap", bit sequence index = 0 to 3 may be associated with full power transmission of rank 1, bit sequence index = 4 to 6 may be associated with full power transmission of rank 2, and bit sequence index = 7 may be associated with full power transmission of rank 3.

In addition, the numbers of bits of these bitmaps are not limited to those illustrated in Fig. 3. For example, Fig. 4C illustrates a bitmap that is obtained by increasing each bitmap of 4 port transmission by 3 bits compared to Fig. 4B, and increasing TPMIs that can be used for rank 2.

The UE may transmit as UE capability information a bitmap that indicates antenna ports that include full rated PAs (or that can perform transmission by using the full rated PAs) instead of or together with a bitmap that indicates a subset of TPMIs for performing full power transmission.

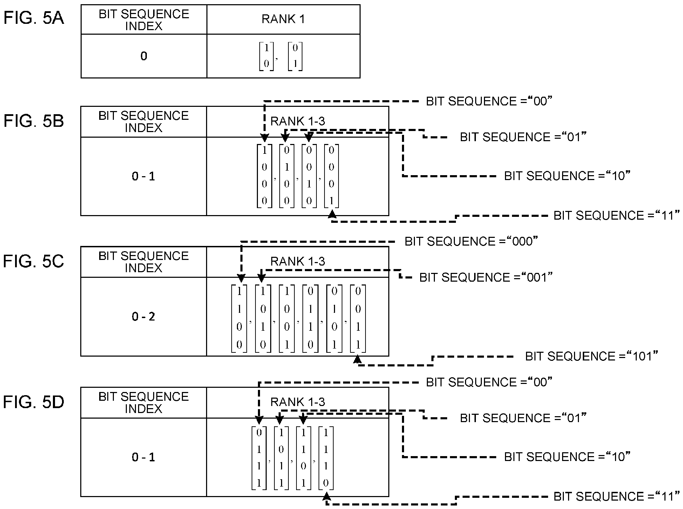

Figs. 5A to 5D are diagrams illustrating bitmaps that indicate antenna ports that include full rated PAs. These bitmaps may indicate antenna ports that include full rated PAs (or that can perform transmission by using the full rated PAs) irrespectively of a rank (commonly between ranks).

Fig. 5A illustrates a case of 2 port transmission. When, for example, this 1 bit (bit sequence index = bit of 0) is '0', [1 0]^{T} (T represents a transpose of a matrix, which applies likewise below) may be indicated as a codebook (precoding matrix). When this 1 bit is '1', a matrix [0 1]^{T} may be indicated as a codebook. [1 0]^{T} may mean that, for example, an antenna port #0 includes a full rated PA.

Fig. 5B illustrates a case of 4 port transmission where the UE includes one full rated PA (the UE can use one full rated PA). One of 4 antenna ports is indicated, so that a bit sequence can be expressed by 2 bits.

Fig. 5C illustrates a case of 4 port transmission where the UE includes two full rated PAs (the UE can use two full rated PAs). Two of 4 antenna ports are indicated, so that a bit sequence can be expressed by 3 bits.

Fig. 5D illustrates a case of 4 port transmission where the UE includes three full rated PAs (the UE can use three full rated PAs). Three of 4 antenna ports are indicated, so that a bit sequence can be expressed by 2 bits.

The UE may be scheduled by the network (base station) that has received the above UE capability information to perform PUSCH transmission that uses a TPMI (or an antenna port) that enables full power transmission by taking the above-described bitmap into account.

According to the above-described first embodiment, the UE can appropriately report capability related to full power transmission to the network.

### <Second Embodiment>

According to the second embodiment, which is not part of the invention, in a case where a UE supports both of modes 1 and 2, the UE may assume one of the modes based on at least one of a given priority, other configurations and an indicated parameter.

The second embodiment may be roughly classified into followings as for the UE that supports both of the modes 1 and 2:
(Embodiment 2-1) The mode is explicitly configured by a higher layer signaling,
(Embodiment 2-2) The mode is determined based on an SRI field of DCI,
(Embodiment 2-3) The mode is determined based on a new field of DCI,
(Embodiment 2-4) The mode is determined based on an SRS request field of DCI, and
(Embodiment 2-5) The mode is implicitly determined based on at least one of a higher layer parameter and DCI.

### [Embodiment 2-1]

Information that enables one of the modes may be configured to the UE by a higher layer signaling.

When the mode 1 is configured to the UE, the UE may transmit a PUSCH assuming processing of the mode 1 (in other words, based on the mode 1). When the mode 2 is configured to the UE, the UE may transmit a PUSCH assuming processing of the mode 2 (in other words, based on the mode 2).

When the mode is not explicitly configured to the UE, the UE may transmit a PUSCH assuming one of the modes. Alternatively, when the mode is not explicitly configured to the UE, the UE may perform an operation similar to that of Rel-15 NR without assuming any one of the modes.

According to embodiment 2-1, a communication overhead for determining the modes 1 and 2 is little

### [Embodiment 2-2]

The UE may assume that, when a first SRS resource set that includes more than one SRS resource of the same numbers of SRS ports (a higher layer parameter "nrofSRS-Ports" is the same) and whose usage is a "codebook", and a second SRS resource set that includes more than one SRS resource of different numbers of SRS ports and whose usage is a "codebook" are configured, an SRS resource set (i.e., mode) used for PUSCH transmission is indicated by an SRI of DCI.

In addition, according to Rel-15 NR, an SRI field size is 1 bit at maximum in a case where codebook-based transmission (RRC parameter "txConfig" = 'codebook') is configured, and 2 bits at maximum in a case where non codebook-based transmission (RRC parameter "txConfig" = 'nonCodebook') is configured. The UE to which a plurality of SRS resource sets of the same usage are configured as described above may assume that a size of an SRI field included in DCI is larger than that of an SRI field of Rel-15 NR.

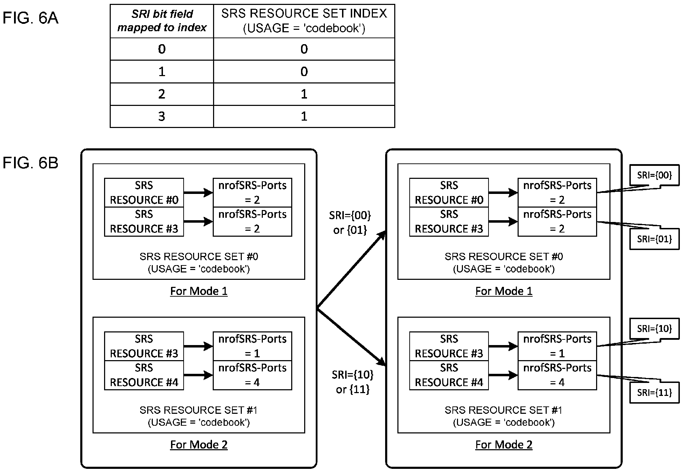

Figs. 6A and 6B are diagrams illustrating one example of mode determination according to embodiment 2-2. Fig. 6A illustrates a correspondence between an SRI field value (index) and an SRS resource set index (whose usage is a "codebook" in this case). In this regard, the correspondence may be specified in advance by a specification, or may be configured by a higher layer signaling. In this example, SRI indices 0 and 1 are associated with an SRS resource set index 0, and SRI indices 2 and 3 are associated with an SRS resource set index 1.

A left side of Fig. 6B illustrates two SRS resource sets (usage of both of the SRS resource sets is a codebook) configured to the UE by a higher layer signaling. An SRS resource set #0 includes SRS resources #0 and #3 whose number of SRS ports is 2 (nrofSRS-Ports = 2). An SRS resource set #1 includes the SRS resource #3 whose number of SRS ports is 1 and an SRS resource #4 whose number of SRS ports is 4. That is, the SRS resource set #0 is associated with the mode 1, and the SRS resource set #1 is associated with the mode 2.

Assuming that there is the correspondence of Fig. 6A, the UE that has received DCI including SRI = {00} (that is 0 as a value) or {01} (that is 1 as a value) may decide that the SRS resource set #0 (i.e. mode 1) has been indicated. Furthermore, the UE may decide that a smaller (or larger) value of the two SRI values of the SRS resource set #0 is associated with a smaller (or larger) SRS resource index. In this example, the UE may decide that SRI = 0 indicates the SRS resource #0 of the SRS resource set #0, and SRI = 1 indicates the SRS resource #3 of the SRS resource set #0.

In addition, {x} in the present disclosure may mean that x is noted as a binary number.

Furthermore, the UE that has received DCI including SRI = {10} (that is 2 as a value) or {11} (that is 3 as a value) may decide that the SRS resource set #1 (i.e. mode 2) has been indicated. Furthermore, the UE may decide that a smaller (or larger) value of the two SRI values of the SRS resource set #1 is associated with a smaller (or larger) SRS resource index. In this example, the UE may decide that SRI = 2 indicates the SRS resource #3 of the SRS resource set #1, and SRI = 3 indicates the SRS resource #4 of the SRS resource set #1.

According to embodiment 2-2, it is possible to dynamically switch the modes 1 and 2.

### [Embodiment 2-3]

The UE may assume that, when a first SRS resource set that includes more than one SRS resource of the same numbers of SRS ports and whose usage is a "codebook", and a second SRS resource set that includes more than one SRS resource of different numbers of SRS ports and whose usage is a "codebook" are configured, an SRS resource set (i.e., mode) used for PUSCH transmission is indicated by a new field of DCI.

The new field may be referred to as, for example, a Mode Indicator (MI) field, an enabled mode indicator field, a mode field and an SRS resource set indicator field.

In this regard, the MI field may indicate an enabled mode for full power PUSCH transmission. According to embodiment 2-3, an SRI field size may be the same as that of Rel-15 NR.

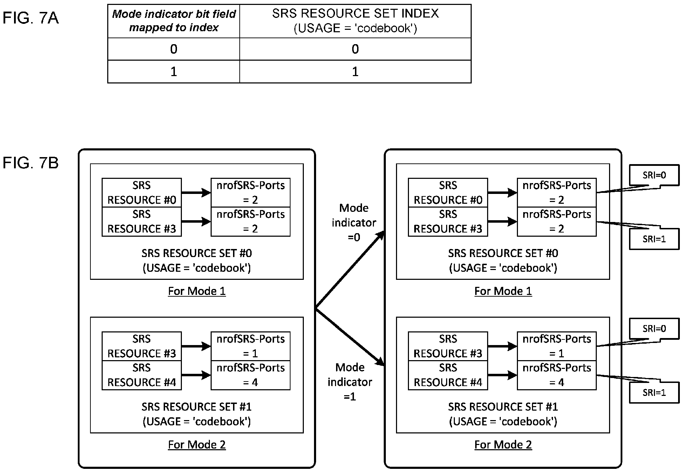

Figs. 7A and 7B are diagrams illustrating one example of mode determination according to embodiment 2-3. Fig. 7A illustrates a correspondence between an MI field value (index) and an SRS resource set index (whose usage is a "codebook" in this case). In this regard, the correspondence may be specified in advance by a specification, or may be configured by a higher layer signaling. In this example, an MI index 0 is associated with the SRS resource set index 0, and an MI index 1 is associated with the SRS resource set index 1.

The left side of Fig. 7B employs the same configuration as that of the SRS resource set on the left side of Fig. 6B, and therefore explanation thereof will not be repeated. Assuming that there is the correspondence of Fig. 7A, the UE that has received DCI including MI = {0} (that is 0 as a value) may decide that the SRS resource set #0 (i.e. mode 1) has been indicated. Furthermore, the UE may decide that a smaller (or larger) value of the two SRI values of the SRS resource set #0 is associated with a smaller (or larger) SRS resource index. In this example, the UE may decide that SRI = 0 indicates the SRS resource #0 of the SRS resource set #0, and SRI = 1 indicates the SRS resource #3 of the SRS resource set #0.

Furthermore, the UE that has received DCI including MI = {1} (that is 1 as a value) may decide that the SRS resource set #1 (i.e. mode 2) has been indicated. Furthermore, the UE may decide that a smaller (or larger) value of the two SRI values of the SRS resource set #1 is associated with a smaller (or larger) SRS resource index. In this example, the UE may decide that SRI = 0 indicates the SRS resource #3 of the SRS resource set #1, and SRI = 1 indicates the SRS resource #4 of the SRS resource set #1.

According to embodiment 2-3, it is possible to dynamically the switch modes 1 and 2.

### [Embodiment 2-4]

The UE may assume that, when a first SRS resource set that includes more than one SRS resource of the same numbers of SRS ports and whose usage is a "codebook", and a second SRS resource set that includes more than one SRS resource of different numbers of SRS ports and whose usage is a "codebook" are configured, an SRS resource set (i.e., mode) used for PUSCH transmission is indicated by an SRS request field of DCI.

When the first SRS resource set and the second SRS resource set are configured, the UE may assume that an aperiodic SRS trigger is disabled (it is not possible to perform at least one of measurement and report of an aperiodic SRS).

In addition, according to embodiment 2-4, an SRI field size may be the same as that of Rel-15 NR. An SRS request field size may be 2 bits that are the same as those of Rel-15 NR, or may be a different number of bits.

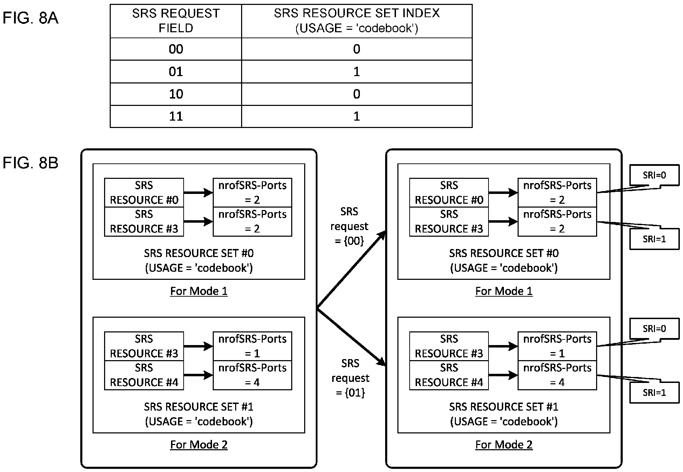

Figs. 8A and 8B are diagrams illustrating one example of mode determination according to embodiment 2-4. Fig. 8A illustrates a correspondence between an SRS request field value (index) and an SRS resource set index (whose usage is a "codebook" in this case). In this regard, the correspondence may be specified in advance by a specification, or may be configured by a higher layer signaling. In this example, SRS request fields = {00} and {10} are associated with the SRS resource set index 0, and SRS request fields = {01} and {11} are associated with the SRS resource set index 1.

The left side of Fig. 8B employs the same configuration as that of the SRS resource set on the left side of Fig. 6B, and therefore explanation thereof will not be repeated. Assuming that there is the correspondence of Fig. 8A, the UE that has received DCI including SRS request field = {00} may decide that the SRS resource set #0 (i.e. mode 1) has been indicated. Furthermore, the UE may decide that a smaller (or larger) value of the two SRI values of the SRS resource set #0 is associated with a smaller (or larger) SRS resource index. In this example, the UE may decide that SRI = 0 indicates the SRS resource #0 of the SRS resource set #0, and SRI = 1 indicates the SRS resource #3 of the SRS resource set #0.

Furthermore, the UE that has received DCI including SRS request field = {01} may decide that the SRS resource set #1 (i.e. mode 2) has been indicated. Furthermore, the UE may decide that a smaller (or larger) value of the two SRI values of the SRS resource set #1 is associated with a smaller (or larger) SRS resource index. In this example, the UE may decide that SRI = 0 indicates the SRS resource #3 of the SRS resource set #1, and SRI = 1 indicates the SRS resource #4 of the SRS resource set #1.

According to embodiment 2-4, it is possible to dynamically switch the modes 1 and 2.

In addition, the SRS request field according to embodiment 2-4 is not limited to an SRS request field that is included in a DCI format (e.g., DCI format 0_1) for scheduling a PUSCH, and may be, for example, an SRS request field that is included in a DCI format (e.g., DCI format 1_1) for scheduling a PDSCH, and an SRS request field that is included in group common DCI (e.g., DCI format 2_3).

Furthermore, the SRS request field according to embodiment 2-4 may be read as other fields of DCI.

### [Embodiment 2-5]

The UE may determine the mode used for PUSCH transmission based on, for example, at least one of followings:
(1) An SRS resource set,
(2) A transform precoder of a PUSCH (transform precoding),
(3) A bandwidth of PUSCH transmission (e.g., the number of resource blocks), and
(4) A parameter related to reception of DCI (PDCCH) or a PDSCH.

As for above (1), when an SRS resource set that includes more than one SRS resource of the same numbers of SRS ports and whose usage is a "codebook" is configured to the UE, the UE may transmit a PUSCH assuming processing of the mode 1. As for above (1), when an SRS resource set that includes more than one SRS resource of different numbers of SRS ports and whose usage is a "codebook" is configured to the UE, the UE may transmit a PUSCH assuming processing of the mode 2.

As for above (2), when a transform precoder of a PUSCH is configured to enabled, the UE may transmit a PUSCH assuming processing of one of the modes 1 and 2. When a transform precoder of a PUSCH is configured to disabled, the UE may transmit a PUSCH assuming processing of one of the modes 1 and 2 (e.g., a mode different from the mode in a case where the transform precoder is enabled).

In addition, when the transform precoder is enabled, the UE applies Discrete Fourier Transform Spread OFDM (DFT-s-OFDM) and transmits a PUSCH. When the transform precoder is disabled, the UE applies Cyclic Prefix OFDM (CP-OFDM) and transmits a PUSCH. DFT-s-OFDM has low Peak-to-Average Power Ratio (PAPR) characteristics, and therefore is suitable for communication at a cell edge. On the other hand, CP-OFDM can readily realize a high throughput, and therefore is suitable for communication at a cell center.

A correspondence between a transform precoder of a PUSCH and a mode may be defined by a specification, or may be configured to the UE by a higher layer signaling. It is preferable to associate the mode with the transform precoder by taking into account preferred characteristics of the above-described communication at the cell edge and the cell center.

As for above (3), when the number of Physical Resource Blocks (PRBs) for a PUSCH is larger than a threshold, the UE may transmit a PUSCH assuming processing of one of the modes 1 and 2. When the number of PRBs for a PUSCH is the threshold or less, the UE may transmit a PUSCH assuming processing of one of the modes 1 and 2 (e.g., a mode different from the mode in a case where the number of PRBs is larger than the threshold).

In addition, it is supposed that tendency of the number of PRBs to be allocated to a PUSCH differs according to communication at the cell edge or communication at the cell center. For example, it may be assumed that communication at the cell edge does not provide good efficiency, and therefore the number of PRBs is relatively small, and communication at the cell center provides good efficiency, and therefore the number of PRBs is relatively large.

A correspondence between the number of PRBs (the number of PRBs to be scheduled) of a PUSCH and the mode may be defined by the specification, or may be configured to the UE by a higher layer signaling. It is preferable to associate the mode with the number of PRBs of the PUSCH by taking into account operation characteristics of the above-described communication at the cell edge and the cell center.

Furthermore, the above threshold may be defined by the specification, or may be configured to the UE by a higher layer signaling. For example, the above threshold may be, for example, 20 PRBs.

As for above (4), the UE may determine the mode to be applied to PUSCH transmission based on a specific parameter (or a value based on the specific parameter). When, for example, the value based on the specific parameter (or a remainder obtained by dividing the value by the number of SRS ports of SRS resources indicated by an SRI of DCI) is an even number, the UE may assume the modes 1 and 2. When the value is an odd number, the UE may assume one of the modes 1 and 2 (e.g., a mode different from the mode in a case where the value is the even number).

In this regard, (the value based on) the specific parameter may be at least one of followings:
·A specific Control Channel Element (CCE) index to which DCI (PDCCH) for scheduling a PUSCH is mapped (e.g., a minimum CCE index to which the PDCCH is mapped),
·A COntrol REsource SET (CORESET) index corresponding to DCI (PDCCH) for scheduling a PUSCH,
·An index of a Transmission Configuration Indication state (TCI state) or Quasi-Co-Location (QCL) assumption associated with DCI (PDCCH) for scheduling a PUSCH, and
·A Transmit Power Control (TPC) command included in DCI for scheduling a PDSCH of a given cell (e.g., secondary cell).

According to embodiment 2-5, it is possible to dynamically switch the modes 1 and 2 while suppressing a communication overhead for determining the modes 1 and 2.

According to the above-described second embodiment, even the UE that supports the modes 1 and 2 can appropriately decide the mode used for UL transmission.

### <Others>

Each embodiment has described SRS resource sets whose usage is a codebook, yet is not limited to this. Description of each embodiment may be read as, for example, determination of the modes 1 or 2 for an SRS resource set whose usage is a non codebook. In this case, a difference in the number of bits of an SRI field is appropriately understood by a person skilled in the art. In a case where, for example, the embodiments are read based on SRS resource sets whose usage is a non codebook, a person skilled in the art appropriately understands that the number of bits of an SRI field of Rel-15 NR is 2.

Furthermore, the above-described embodiments have been described assuming the two modes, yet are not limited to this. For example, three or modes may be defined.

Furthermore, each of the above-described embodiments has described UL transmission that uses an antenna port assuming a PUSCH. However, full power transmission of at least one of another signal and channel may be controlled in addition to a PUSCH or instead of a PUSCH.

That is, the antenna port according to each of the above-described embodiments may be an antenna port of at least one of, for example, a PUSCH (or a DeModulation Reference Signal (DMRS) for the PUSCH), a Phase Tracking Reference Signal (PTRS), a Physical Uplink Control Channel (PUCCH), a Physical Random Access Channel (PRACH) and an SRS, and full power transmission may be applied to at least one of these signals and channels.

### (Radio Communication System)

The configuration of the radio communication system according to one embodiment of the present disclosure will be described below. This radio communication system uses one or a combination of the radio communication method according to each of the above embodiments of the present disclosure to perform communication.

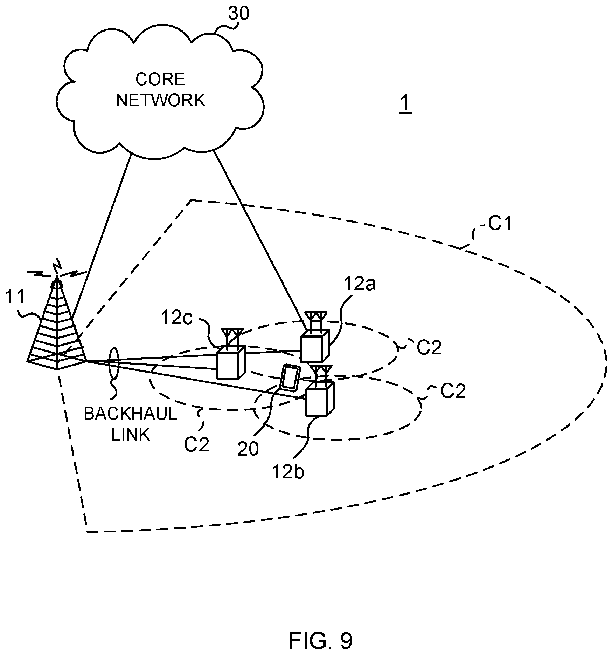

Fig. 9 is a diagram illustrating one example of a schematic configuration of the radio communication system according to the one embodiment. A radio communication system 1 may be a system that realizes communication by using Long Term Evolution (LTE) or the 5th generation mobile communication system New Radio (5G NR) specified by the Third Generation Partnership Project (3GPP).

Furthermore, the radio communication system 1 may support dual connectivity between a plurality of Radio Access Technologies (RATs) (Multi-RAT Dual Connectivity (MR-DC)). MR-DC may include dual connectivity (E-UTRA-NR Dual Connectivity (EN-DC)) of LTE (Evolved Universal Terrestrial Radio Access (E-UTRA)) and NR, and dual connectivity (NR-E-UTRA Dual Connectivity (NE-DC)) of NR and LTE.

According to EN-DC, a base station (eNB) of LTE (E-UTRA) is a Master Node (MN), and a base station (gNB) of NR is a Secondary Node (SN). According to NE-DC, a base station (gNB) of NR is an MN, and a base station (eNB) of LTE (E-UTRA) is an SN.

The radio communication system 1 may support dual connectivity between a plurality of base stations in an identical RAT (e.g., dual connectivity (NR-NR Dual Connectivity (NN-DC)) where both of the MN and the SN are base stations (gNBs) according to NR).

The radio communication system 1 may include a base station 11 that forms a macro cell C1 of a relatively wide coverage, and base stations 12 (12a to 12c) that are located in the macro cell C1 and form small cells C2 narrower than the macro cell C1. The user terminal 20 may be located in at least one cell. An arrangement and the numbers of respective cells and the user terminals 20 are not limited to the aspect illustrated in Fig. 9. The base stations 11 and 12 will be collectively referred to as a base station 10 below when not distinguished.

The user terminal 20 may connect with at least one of a plurality of base stations 10. The user terminal 20 may use at least one of Carrier Aggregation (CA) and Dual Connectivity (DC) that use a plurality of Component Carriers (CCs).

Each CC may be included in at least one of a first frequency range (Frequency Range 1 (FR 1)) and a second frequency range (Frequency Range 2 (FR 2)). The macro cell C1 may be included in the FR 1, and the small cell C2 may be included in the FR 2. For example, the FR 1 may be a frequency range equal to or less than 6 GHz (sub-6 GHz), and the FR 2 may be a frequency range higher than 24 GHz (above-24 GHz). In addition, the frequency ranges and definitions of the FR 1 and the FR 2 are not limited to these, and, for example, the FR 1 may correspond to a frequency range higher than the FR 2.

Furthermore, the user terminal 20 may perform communication by using at least one of Time Division Duplex (TDD) and Frequency Division Duplex (FDD) in each CC.

A plurality of base stations 10 may be connected by way of wired connection (e.g., optical fibers compliant with a Common Public Radio Interface (CPRI) or an X2 interface) or radio connection (e.g., NR communication). When, for example, NR communication is used as a backhaul between the base stations 11 and 12, the base station 11 corresponding to a higher station may be referred to as an Integrated Access Backhaul (IAB) donor, and the base station 12 corresponding to a relay station (relay) may be referred to as an IAB node.

The base station 10 may be connected with a core network 30 via the another base station 10 or directly. The core network 30 may include at least one of, for example, an Evolved Packet Core (EPC), a 5G Core Network (5GCN) and a Next Generation Core (NGC).

The user terminal 20 is a terminal that supports at least one of communication schemes such as LTE, LTE-A and 5G.

The radio communication system 1 may use an Orthogonal Frequency Division Multiplexing (OFDM)-based radio access scheme. For example, on at least one of Downlink (DL) and Uplink (UL), Cyclic Prefix OFDM (CP-OFDM), Discrete Fourier Transform Spread OFDM (DFT-s-OFDM), Orthogonal Frequency Division Multiple Access (OFDMA) and Single Carrier Frequency Division Multiple Access (SC-FDMA) may be used.

The radio access scheme may be referred to as a waveform. In addition, the radio communication system 1 may use another radio access scheme (e.g., another single carrier transmission scheme or another multicarrier transmission scheme) as the radio access scheme on UL and DL.

The radio communication system 1 may use a downlink shared channel (Physical Downlink Shared Channel (PDSCH)) shared by each user terminal 20, a broadcast channel (Physical Broadcast Channel (PBCH)) and a downlink control channel (Physical Downlink Control Channel (PDCCH)) as downlink channels.

Furthermore, the radio communication system 1 may use an uplink shared channel (Physical Uplink Shared Channel (PUSCH)) shared by each user terminal 20, an uplink control channel (Physical Uplink Control Channel (PUCCH)) and a random access channel (Physical Random Access Channel (PRACH)) as uplink channels.

User data, higher layer control information and a System Information Block (SIB) are conveyed on the PDSCH. The user data and the higher layer control information may be conveyed on the PUSCH. Furthermore, a Master Information Block (MIB) may be conveyed on the PBCH.

Lower layer control information may be conveyed on the PDCCH. The lower layer control information may include, for example, Downlink Control Information (DCI) including scheduling information of at least one of the PDSCH and the PUSCH.

In addition, DCI for scheduling the PDSCH may be referred to as, for example, a DL assignment or DL DCI, and DCI for scheduling the PUSCH may be referred to as, for example, a UL grant or UL DCI. In this regard, the PDSCH may be read as DL data, and the PUSCH may be read as UL data.

A COntrol REsource SET (CORESET) and a search space may be used to detect the PDCCH. The CORESET corresponds to a resource for searching DCI. The search space corresponds to a search domain and a search method of PDCCH candidates. One CORESET may be associated with one or a plurality of search spaces. The UE may monitor a CORESET associated with a certain search space based on a search space configuration.

One search space may be associated with a PDCCH candidate corresponding to one or a plurality of aggregation levels. One or a plurality of search spaces may be referred to as a search space set. In addition, a "search space", a "search space set", a "search space configuration", a "search space set configuration", a "CORESET" and a "CORESET configuration" in the present disclosure may be interchangeably read.

Uplink Control Information (UCI) including at least one of Channel State Information (CSI), transmission acknowledgement information (that may be referred to as, for example, Hybrid Automatic Repeat reQuest ACKnowledgement (HARQ-ACK) or ACK/NACK) and a Scheduling Request (SR) may be conveyed on the PUCCH. A random access preamble for establishing connection with a cell may be conveyed on the PRACH.

In addition, downlink and uplink in the present disclosure may be expressed without adding "link" thereto. Furthermore, various channels may be expressed without adding "physical" to heads of the various channels.

The radio communication system 1 may convey a Synchronization Signal (SS) and a Downlink Reference Signal (DL-RS). The radio communication system 1 may convey a Cell-specific Reference Signal (CRS), a Channel State Information Reference Signal (CSI-RS), a DeModulation Reference Signal (DMRS), a Positioning Reference Signal (PRS) and a Phase Tracking Reference Signal (PTRS) as DL-RSs.

The synchronization signal may be at least one of, for example, a Primary Synchronization Signal (PSS) and a Secondary Synchronization Signal (SSS). A signal block including the SS (the PSS or the SSS) and the PBCH (and the DMRS for the PBCH) may be referred to as, for example, an SS/PBCH block or an SS Block (SSB). In addition, the SS and the SSB may be also referred to as reference signals.

Furthermore, the radio communication system 1 may convey a Sounding Reference Signal (SRS) and a DeModulation Reference Signal (DMRS) as UpLink Reference Signals (UL-RSs). In this regard, the DMRS may be referred to as a user terminal-specific reference signal (UE-specific reference signal).

### (Base Station)

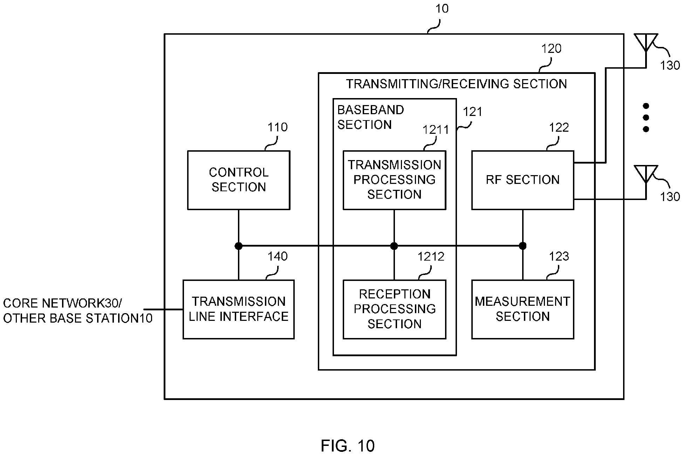

Fig. 10 is a diagram illustrating one example of a configuration of the base station according to the one embodiment. The base station 10 includes a control section 110, a transmitting/receiving section 120, transmission/reception antennas 130 and a transmission line interface 140. In addition, the base station 10 may include one or more of each of the control sections 110, the transmitting/receiving sections 120, the transmission/reception antennas 130 and the transmission line interfaces 140.

In addition, this example mainly illustrates function blocks of characteristic portions according to the present embodiment, and may assume that the base station 10 includes other function blocks, too, that are necessary for radio communication. Part of processing of each section described below may be omitted.

The control section 110 controls the entire base station 10. The control section 110 can be composed of a controller or a control circuit described based on the common knowledge in the technical field according to the present disclosure.

The control section 110 may control signal generation and scheduling (e.g., resource allocation or mapping). The control section 110 may control transmission/reception and measurement that use the transmitting/receiving section 120, the transmission/reception antennas 130 and the transmission line interface 140. The control section 110 may generate data, control information or a sequence to be transmitted as a signal, and forward the signal to the transmitting/receiving section 120. The control section 110 may perform call processing (such as configuration and release) of a communication channel, state management of the base station 10 and radio resource management.

The transmitting/receiving section 120 may include a baseband section 121, a Radio Frequency (RF) section 122 and a measurement section 123. The baseband section 121 may include a transmission processing section 1211 and a reception processing section 1212. The transmitting/receiving section 120 can be composed of a transmitter/receiver, an RF circuit, a baseband circuit, a filter, a phase shifter, a measurement circuit and a transmission/reception circuit described based on the common knowledge in the technical field according to the present disclosure.

The transmitting/receiving section 120 may be composed as an integrated transmitting/receiving section, or may be composed of a transmitting section and a receiving section. The transmitting section may be composed of the transmission processing section 1211 and the RF section 122. The receiving section may be composed of the reception processing section 1212, the RF section 122 and the measurement section 123.

The transmission/reception antenna 130 can be composed of an antenna such as an array antenna described based on the common knowledge in the technical field according to the present disclosure.

The transmitting/receiving section 120 may transmit the above-described downlink channel, synchronization signal and downlink reference signal. The transmitting/receiving section 120 may receive the above-described uplink channel and uplink reference signal.

The transmitting/receiving section 120 may form at least one of a transmission beam and a reception beam by using digital beam forming (e.g., precoding) or analog beam forming (e.g., phase rotation).

The transmitting/receiving section 120 (transmission processing section 1211) may perform Packet Data Convergence Protocol (PDCP) layer processing, Radio Link Control (RLC) layer processing (e.g., RLC retransmission control), and Medium Access Control (MAC) layer processing (e.g., HARQ retransmission control) on, for example, the data and the control information obtained from the control section 110, and generate a bit sequence to transmit.

The transmitting/receiving section 120 (transmission processing section 1211) may perform transmission processing such as channel coding (that may include error correction coding), modulation, mapping, filter processing, Discrete Fourier Transform (DFT) processing (when needed), Inverse Fast Fourier Transform (IFFT) processing, precoding and digital-analog conversion on the bit sequence to transmit, and output a baseband signal.

The transmitting/receiving section 120 (RF section 122) may modulate the baseband signal into a radio frequency range, perform filter processing and amplification on the signal, and transmit the signal of the radio frequency range via the transmission/reception antennas 130.

On the other hand, the transmitting/receiving section 120 (RF section 122) may perform amplification and filter processing on the signal of the radio frequency range received by the transmission/reception antennas 130, and demodulate the signal into a baseband signal.

The transmitting/receiving section 120 (reception processing section 1212) may apply reception processing such as analog-digital conversion, Fast Fourier Transform (FFT) processing, Inverse Discrete Fourier Transform (IDFT) processing (when needed), filter processing, demapping, demodulation, decoding (that may include error correction decoding), MAC layer processing, RLC layer processing and PDCP layer processing to the obtained baseband signal, and obtain user data.

The transmitting/receiving section 120 (measurement section 123) may perform measurement related to the received signal. For example, the measurement section 123 may perform Radio Resource Management (RRM) measurement or Channel State Information (CSI) measurement based on the received signal. The measurement section 123 may measure received power (e.g., Reference Signal Received Power (RSRP)), received quality (e.g., Reference Signal Received Quality (RSRQ), a Signal to Interference plus Noise Ratio (SINR) or a Signal to Noise Ratio (SNR)), a signal strength (e.g., a Received Signal Strength Indicator (RSSI)) or channel information (e.g., CSI). The measurement section 123 may output a measurement result to the control section 110.

The transmission line interface 140 may transmit and receive (backhaul signaling) signals to and from apparatuses and the other base stations 10 included in the core network 30, and obtain and convey user data (user plane data) and control plane data for the user terminal 20.

In addition, the transmitting section and the receiving section of the base station 10 according to the present disclosure may be composed of at least one of the transmitting/receiving section 120, the transmission/reception antenna 130 and the transmission line interface 140.

In addition, when the transmitting/receiving section 120 receives, from the user terminal 20, capability information that indicates that the user terminal 20 supports full power transmission, and non coherent, or non partial and non coherent codebook subsets are configured to the user terminal, a fully coherent codebook subset may be indicated by Downlink Control Information (DCI).

### (User Terminal)

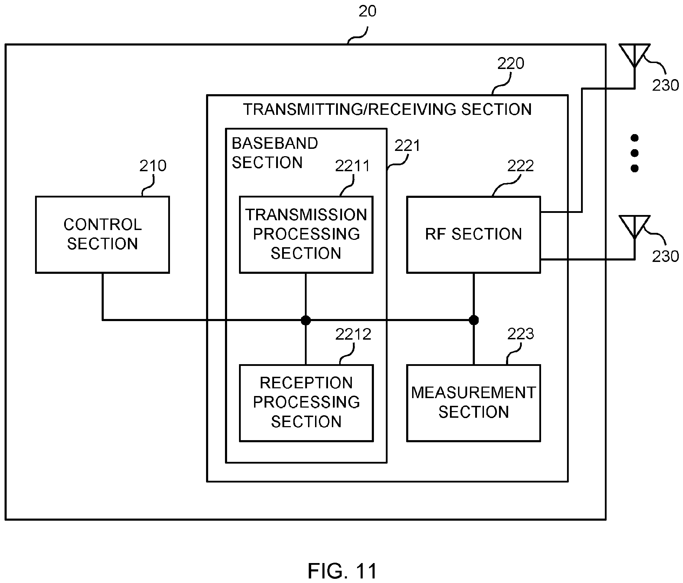

Fig. 11 is a diagram illustrating one example of a configuration of the user terminal according to the one embodiment. The user terminal 20 includes a control section 210, a transmitting/receiving section 220 and transmission/reception antennas 230. In this regard, the user terminal 20 may include one or more of each of the control sections 210, the transmitting/receiving sections 220 and the transmission/reception antennas 230.

In addition, this example mainly illustrates function blocks of characteristic portions according to the present embodiment, and may assume that the user terminal 20 includes other function blocks, too, that are necessary for radio communication. Part of processing of each section described below may be omitted.

The control section 210 controls the entire user terminal 20. The control section 210 can be composed of a controller or a control circuit described based on the common knowledge in the technical field according to the present disclosure.

The control section 210 may control signal generation and mapping. The control section 210 may control transmission/reception and measurement that use the transmitting/receiving section 220 and the transmission/reception antennas 230. The control section 210 may generate data, control information or a sequence to be transmitted as a signal, and forward the signal to the transmitting/receiving section 220.

The transmitting/receiving section 220 may include a baseband section 221, an RF section 222 and a measurement section 223. The baseband section 221 may include a transmission processing section 2211 and a reception processing section 2212. The transmitting/receiving section 220 can be composed of a transmitter/receiver, an RF circuit, a baseband circuit, a filter, a phase shifter, a measurement circuit and a transmission/reception circuit described based on the common knowledge in the technical field according to the present disclosure.

The transmitting/receiving section 220 may be composed as an integrated transmitting/receiving section, or may be composed of a transmitting section and a receiving section. The transmitting section may be composed of the transmission processing section 2211 and the RF section 222. The receiving section may be composed of the reception processing section 2212, the RF section 222 and the measurement section 223.

The transmission/reception antenna 230 can be composed of an antenna such as an array antenna described based on the common knowledge in the technical field according to the present disclosure.

The transmitting/receiving section 220 may receive the above-described downlink channel, synchronization signal and downlink reference signal. The transmitting/receiving section 220 may transmit the above-described uplink channel and uplink reference signal.

The transmitting/receiving section 220 may form at least one of a transmission beam and a reception beam by using digital beam forming (e.g., precoding) or analog beam forming (e.g., phase rotation).

The transmitting/receiving section 220 (transmission processing section 2211) may perform PDCP layer processing, RLC layer processing (e.g., RLC retransmission control) and MAC layer processing (e.g., HARQ retransmission control) on, for example, the data and the control information obtained from the control section 210, and generate a bit sequence to transmit.

The transmitting/receiving section 220 (transmission processing section 2211) may perform transmission processing such as channel coding (that may include error correction coding), modulation, mapping, filter processing, DFT processing (when needed), IFFT processing, precoding and digital-analog conversion on the bit sequence to transmit, and output a baseband signal.

In this regard, whether or not to apply the DFT processing may be based on a configuration of transform precoding. When transform precoding is enabled for a certain channel (e.g., PUSCH), the transmitting/receiving section 220 (transmission processing section 2211) may perform the DFT processing as the above transmission processing to transmit the certain channel by using a DFT-s-OFDM waveform. When precoding is not enabled, the transmitting/receiving section 220 (transmission processing section 2211) may not perform the DFT processing as the above transmission processing.

The transmitting/receiving section 220 (RF section 222) may modulate the baseband signal into a radio frequency range, perform filter processing and amplification on the signal, and transmit the signal of the radio frequency range via the transmission/reception antennas 230.

On the other hand, the transmitting/receiving section 220 (RF section 222) may perform amplification and filter processing on the signal of the radio frequency range received by the transmission/reception antennas 230, and demodulate the signal into a baseband signal.

The transmitting/receiving section 220 (reception processing section 2212) may apply reception processing such as analog-digital conversion, FFT processing, IDFT processing (when needed), filter processing, demapping, demodulation, decoding (that may include error correction decoding), MAC layer processing, RLC layer processing and PDCP layer processing to the obtained baseband signal, and obtain user data.

The transmitting/receiving section 220 (measurement section 223) may perform measurement related to the received signal. For example, the measurement section 223 may perform, for example, RRM measurement or CSI measurement based on the received signal. The measurement section 223 may measure, for example, received power (e.g., RSRP), received quality (e.g., RSRQ, an SINR or an SNR), a signal strength (e.g., RSSI) or channel information (e.g., CSI). The measurement section 223 may output a measurement result to the control section 210.

In addition, the transmitting section and the receiving section of the user terminal 20 according to the present disclosure may be composed of at least one of the transmitting/receiving section 220 and the transmission/reception antenna 230.

In addition, in a case where a first mode (mode 1) in a case where the UE is configured such that one or a plurality of Sounding Reference Signal (SRS) resources included in one SRS resource set whose usage is a "codebook" have the same numbers of SRS ports, and the second mode (mode 2) in a case where the UE is configured such that one or a plurality of SRS resources included in one SRS resource set whose usage is a "codebook" have different numbers of SRS ports, the control section 210 may determine that a mode to be applied to transmission of an uplink shared channel (PUSCH) is one of the first mode and the second mode.

The transmitting/receiving section 220 may apply the above determined mode and transmit the uplink shared channel.

Based on an SRS Resource Index (SRI) field (that is, for example, 2 bits in a case where an SRS resource set whose usage is a codebook is configured, and 4 bits in a case where an SRS resource set whose usage is a non codebook is configured) included in Downlink Control Information (DCI), and having a size larger than that of an SRI field (that is, for example, 1 bit in a case where an SRS resource set whose usage is a codebook is configured, and 2 bits in a case where an SRS resource set whose usage is a non codebook is configured) of 3GPP Release 15 New Radio, the control section 210 may determine the mode to be applied to transmission of the uplink shared channel.

The control section 210 may determine the mode to be applied to transmission of the uplink shared channel based on a mode indicator field included in the downlink control information.

The control section 210 may determine the mode to be applied to transmission of the uplink shared channel based on an SRS request field included in the downlink control information.

The control section 210 may determine the mode to be applied to transmission of the uplink shared channel based on (whether) a transform precoder (is enabled or disabled) to be applied to the uplink shared channel.

In addition, the codebook subsets according to the present disclosure may mean codebook subsets in a case of, for example, a specific transform precoder (e.g., whether or not there is the specific transform precoder) and a specific number of ranks.

### (Hardware Configuration)

In addition, the block diagrams used to describe the above embodiments illustrate blocks in function units. These function blocks (components) are realized by an arbitrary combination of at least ones of hardware components and software components. Furthermore, a method for realizing each function block is not limited in particular. That is, each function block may be realized by using one physically or logically coupled apparatus or may be realized by connecting two or more physically or logically separate apparatuses directly or indirectly (by using, for example, wired connection or radio connection) and using a plurality of these apparatuses. Each function block may be realized by combining software with the above one apparatus or a plurality of above apparatuses.

In this regard, the functions include deciding, determining, judging, calculating, computing, processing, deriving, investigating, looking up, ascertaining, receiving, transmitting, outputting, accessing, resolving, selecting, choosing, establishing, comparing, assuming, expecting, considering, broadcasting, notifying, communicating, forwarding, configuring, reconfiguring, allocating, mapping, and assigning, yet are not limited to these. For example, a function block (component) that causes transmission to function may be referred to as, for example, a transmitting unit or a transmitter. As described above, the method for realizing each function block is not limited in particular.

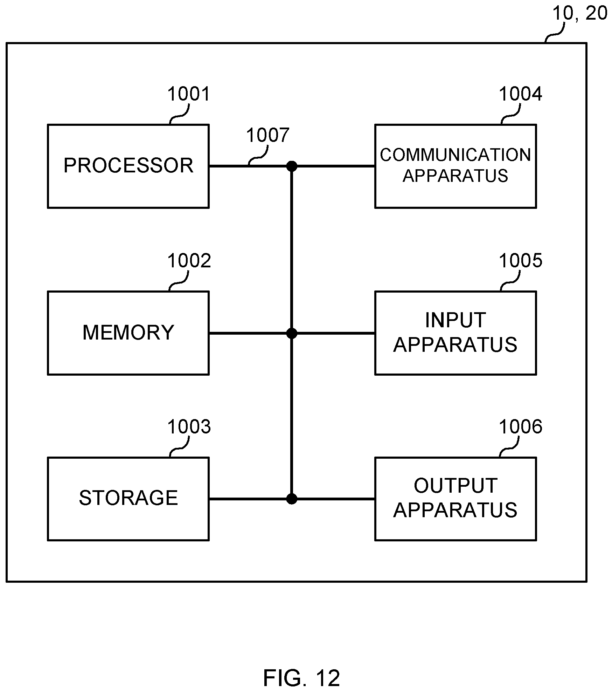

For example, the base station and the user terminal according to the one embodiment of the present disclosure may function as computers that perform processing of the radio communication method according to the present disclosure. Fig. 12 is a diagram illustrating one example of the hardware configurations of the base station and the user terminal according to the one embodiment. The above-described base station 10 and user terminal 20 may be each physically configured as a computer apparatus that includes a processor 1001, a memory 1002, a storage 1003, a communication apparatus 1004, an input apparatus 1005, an output apparatus 1006 and a bus 1007.

In this regard, words such as an apparatus, a circuit, a device, a section and a unit in the present disclosure can be interchangeably read. The hardware configurations of the base station 10 and the user terminal 20 may be configured to include one or a plurality of apparatuses illustrated in Fig. 12 or may be configured without including part of the apparatuses.

For example, Fig. 12 illustrates the only one processor 1001. However, there may be a plurality of processors. Furthermore, processing may be executed by 1 processor or processing may be executed by 2 or more processors simultaneously or successively or by using another method. In addition, the processor 1001 may be implemented by 1 or more chips.

Each function of the base station 10 and the user terminal 20 is realized by, for example, causing hardware such as the processor 1001 and the memory 1002 to read given software (program), and thereby causing the processor 1001 to perform an operation, and control communication via the communication apparatus 1004 and control at least one of reading and writing of data in the memory 1002 and the storage 1003.

The processor 1001 causes, for example, an operating system to operate to control the entire computer. The processor 1001 may be composed of a Central Processing Unit (CPU) including an interface for a peripheral apparatus, a control apparatus, an operation apparatus and a register. For example, at least part of the above-described control section 110 (210) and transmitting/receiving section 120 (220) may be realized by the processor 1001.

Furthermore, the processor 1001 reads programs (program codes), software modules or data from at least one of the storage 1003 and the communication apparatus 1004 out to the memory 1002, and executes various types of processing according to these programs, software modules or data. As the programs, programs that cause the computer to execute at least part of the operations described in the above-described embodiments are used. For example, the control section 110

(210) may be realized by a control program that is stored in the memory 1002 and operates on the processor 1001, and other function blocks may be also realized likewise.

The memory 1002 is a computer-readable recording medium, and may be composed of at least one of, for example, a Read Only Memory (ROM), an Erasable Programmable ROM (EPROM), an Electrically EPROM (EEPROM), a Random Access Memory (RAM) and other appropriate storage media. The memory 1002 may be referred to as, for example, a register, a cache or a main memory (main storage apparatus). The memory 1002 can store programs (program codes) and software modules that can be executed to perform the radio communication method according to the one embodiment of the present disclosure.

The storage 1003 is a computer-readable recording medium, and may be composed of at least one of, for example, a flexible disk, a floppy (registered trademark) disk, a magnetooptical disk (e.g., a compact disk (Compact Disc ROM (CD-ROM)), a digital versatile disk and a Blu-ray (registered trademark) disk), a removable disk, a hard disk drive, a smart card, a flash memory device (e.g., a card, a stick or a key drive), a magnetic stripe, a database, a server and other appropriate storage media. The storage 1003 may be referred to as an auxiliary storage apparatus.

The communication apparatus 1004 is hardware (transmission/reception device) that performs communication between computers via at least one of a wired network and a radio network, and is also referred to as, for example, a network device, a network controller, a network card and a communication module. The communication apparatus 1004 may be configured to include a high frequency switch, a duplexer, a filter and a frequency synthesizer to realize at least one of, for example, Frequency Division Duplex (FDD) and Time Division Duplex (TDD). For example, the above-described transmitting/receiving section 120 (220) and transmission/reception antennas 130 (230) may be realized by the communication apparatus 1004. The transmitting/receiving section 120 (220) may be physically or logically separately implemented as a transmitting section 120a (220a) and a receiving section 120b (220b).

The input apparatus 1005 is an input device (e.g., a keyboard, a mouse, a microphone, a switch, a button or a sensor) that accepts an input from an outside. The output apparatus 1006 is an output device (e.g., a display, a speaker or a Light Emitting Diode (LED) lamp) that sends an output to the outside. In addition, the input apparatus 1005 and the output apparatus 1006 may be an integrated component (e.g., touch panel).

Furthermore, each apparatus such as the processor 1001 or the memory 1002 is connected by the bus 1007 that communicates information. The bus 1007 may be composed by using a single bus or may be composed by using different buses between apparatuses.

Furthermore, the base station 10 and the user terminal 20 may be configured to include hardware such as a microprocessor, a Digital Signal Processor (DSP), an Application Specific Integrated Circuit (ASIC), a Programmable Logic Device (PLD) and a Field Programmable Gate Array (FPGA). The hardware may be used to realize part or entirety of each function block. For example, the processor 1001 may be implemented by using at least one of these hardware components.

### (Modified Example)

In addition, each term that has been described in the present disclosure and each term that is necessary to understand the present disclosure may be replaced with terms having identical or similar meanings. For example, a channel, a symbol and a signal (a signal or a signaling) may be interchangeably read. Furthermore, a signal may be a message. A reference signal can be also abbreviated as an RS, or may be referred to as a pilot or a pilot signal depending on standards to be applied. Furthermore, a Component Carrier (CC) may be referred to as, for example, a cell, a frequency carrier and a carrier frequency.

A radio frame may include one or a plurality of durations (frames) in a time domain. Each of one or a plurality of durations (frames) that makes up a radio frame may be referred to as a subframe. Furthermore, the subframe may include one or a plurality of slots in the time domain. The subframe may be a fixed time duration (e.g., 1 ms) that does not depend on a numerology.

In this regard, the numerology may be a communication parameter to be applied to at least one of transmission and reception of a certain signal or channel. The numerology may indicate at least one of, for example, a SubCarrier Spacing (SCS), a bandwidth, a symbol length, a cyclic prefix length, a Transmission Time Interval (TTI), the number of symbols per TTI, a radio frame configuration, specific filtering processing performed by a transceiver in a frequency domain, and specific windowing processing performed by the transceiver in a time domain.

The slot may include one or a plurality of symbols (Orthogonal Frequency Division Multiplexing (OFDM) symbols or Single Carrier Frequency Division Multiple Access (SC-FDMA) symbols) in the time domain. Furthermore, the slot may be a time unit based on the numerology.

The slot may include a plurality of mini slots. Each mini slot may include one or a plurality of symbols in the time domain. Furthermore, the mini slot may be referred to as a subslot. The mini slot may include a smaller number of symbols than that of the slot. The PDSCH (or the PUSCH) to be transmitted in larger time units than that of the mini slot may be referred to as a PDSCH (PUSCH) mapping type A. The PDSCH (or the PUSCH) to be transmitted by using the mini slot may be referred to as a PDSCH (PUSCH) mapping type B.

The radio frame, the subframe, the slot, the mini slot and the symbol each indicate a time unit for conveying signals. The other corresponding names may be used for the radio frame, the subframe, the slot, the mini slot and the symbol. In addition, time units such as a frame, a subframe, a slot, a mini slot and a symbol in the present disclosure may be interchangeably read.

For example, 1 subframe may be referred to as a TTI, a plurality of contiguous subframes may be referred to as TTIs, or 1 slot or 1 mini slot may be referred to as a TTI. That is, at least one of the subframe and the TTI may be a subframe (1 ms) according to legacy LTE, may be a duration (e.g., 1 to 13 symbols) shorter than 1 ms or may be a duration longer than 1 ms. In addition, a unit that indicates the TTI may be referred to as, for example, a slot or a mini slot instead of a subframe.

In this regard, the TTI refers to, for example, a minimum time unit of scheduling of radio communication. For example, in the LTE system, the base station performs scheduling for allocating radio resources (a frequency bandwidth or transmission power that can be used in each user terminal) in TTI units to each user terminal. In this regard, a definition of the TTI is not limited to this.

The TTI may be a transmission time unit of a channel-coded data packet (transport block), code block or code word, or may be a processing unit of scheduling or link adaptation. In addition, when the TTI is given, a time period (e.g., the number of symbols) in which a transport block, a code block or a code word is actually mapped may be shorter than the TTI.

In addition, in a case where 1 slot or 1 mini slot is referred to as a TTI, 1 or more TTIs (i.e., 1 or more slots or 1 or more mini slots) may be a minimum time unit of scheduling. Furthermore, the number of slots (the number of mini slots) that make up a minimum time unit of the scheduling may be controlled.

The TTI having the time duration of 1 ms may be referred to as, for example, a general TTI (TTIs according to 3GPP Rel. 8 to 12), a normal TTI, a long TTI, a general subframe, a normal subframe, a long subframe or a slot. A TTI shorter than the general TTI may be referred to as, for example, a reduced TTI, a short TTI, a partial or fractional TTI, a reduced subframe, a short subframe, a mini slot, a subslot or a slot.

In addition, the long TTI (e.g., the general TTI or the subframe) may be read as a TTI having a time duration exceeding 1 ms, and the short TTI (e.g., the reduced TTI) may be read as a TTI having a TTI length less than the TTI length of the long TTI and equal to or more than 1 ms.

A Resource Block (RB) is a resource allocation unit of the time domain and the frequency domain, and may include one or a plurality of contiguous subcarriers in the frequency domain. The numbers of subcarriers included in RBs may be the same irrespectively of a numerology, and may be, for example, 12. The numbers of subcarriers included in the RBs may be determined based on the numerology.

Furthermore, the RB may include one or a plurality of symbols in the time domain or may have the length of 1 slot, 1 mini slot, 1 subframe or 1 TTI. 1 TTI or 1 subframe may each include one or a plurality of resource blocks.

In this regard, one or a plurality of RBs may be referred to as, for example, a Physical Resource Block (Physical RB (PRB)), a Sub-Carrier Group (SCG), a Resource Element Group (REG), a PRB pair or an RB pair.

Furthermore, the resource block may include one or a plurality of Resource Elements (REs). For example, 1 RE may be a radio resource domain of 1 subcarrier and 1 symbol.

A Bandwidth Part (BWP) (that may be referred to as, for example, a partial bandwidth) may mean a subset of contiguous common Resource Blocks (common RBs) for a certain numerology in a certain carrier. In this regard, the common RB may be specified by an RB index based on a common reference point of the certain carrier. A PRB may be defined based on a certain BWP, and may be numbered in the certain BWP.

The BWP may include a UL BWP (a BWP for UL) and a DL BWP (a BWP for DL). One or a plurality of BWPs in 1 carrier may be configured to the UE.

At least one of the configured BWPs may be active, and the UE may not assume to transmit and receive given signals/channels outside the active BWP. In addition, a "cell" and a "carrier" in the present disclosure may be read as a "BWP".

In this regard, structures of the above-described radio frame, subframe, slot, mini slot and symbol are only exemplary structures. For example, configurations such as the number of subframes included in a radio frame, the number of slots per subframe or radio frame, the number of mini slots included in a slot, the numbers of symbols and RBs included in a slot or a mini slot, the number of subcarriers included in an RB, the number of symbols in a TTI, a symbol length and a Cyclic Prefix (CP) length can be variously changed.

Furthermore, the information and the parameters described in the present disclosure may be expressed by using absolute values, may be expressed by using relative values with respect to given values or may be expressed by using other corresponding information. For example, a radio resource may be instructed by a given index.

Names used for parameters in the present disclosure are in no respect restrictive names. Furthermore, numerical expressions that use these parameters may be different from those explicitly disclosed in the present disclosure. Various channels (such as the PUCCH and the PDCCH) and information elements can be identified based on various suitable names. Therefore, various names assigned to these various channels and information elements are in no respect restrictive names.

The information and the signals described in the present disclosure may be expressed by using one of various different techniques. For example, the data, the instructions, the commands, the information, the signals, the bits, the symbols and the chips mentioned in the above entire description may be expressed as voltages, currents, electromagnetic waves, magnetic fields or magnetic particles, optical fields or photons, or arbitrary combinations of these.

Furthermore, the information and the signals can be output at least one of from a higher layer to a lower layer and from the lower layer to the higher layer. The information and the signals may be input and output via a plurality of network nodes.

The input and output information and signals may be stored in a specific location (e.g., memory) or may be managed by using a management table. The information and signals to be input and output can be overridden, updated or additionally written. The output information and signals may be deleted. The input information and signals may be transmitted to other apparatuses.

Notification of information is not limited to the aspect/embodiments described in the present disclosure and may be performed by using other methods. For example, the information may be notified in the present disclosure by a physical layer signaling (e.g., Downlink Control Information (DCI) and Uplink Control Information (UCI)), a higher layer signaling (e.g., a Radio Resource Control (RRC) signaling, broadcast information (such as a Master Information Block (MIB) and a System Information Block (SIB)), and a Medium Access Control (MAC) signaling), other signals or combinations of these.

In addition, the physical layer signaling may be referred to as Layer 1/Layer 2 (L1/L2) control information (L1/L2 control signal) or L1 control information (L1 control signal). Furthermore, the RRC signaling may be referred to as an RRC message, and may be, for example, an RRCConnectionSetup message or an RRCConnectionReconfiguration message. Furthermore, the MAC signaling may be notified by using, for example, an MAC Control Element (MAC CE).

Furthermore, notification of given information (e.g., notification of "being X") is not limited to explicit notification, and may be given implicitly (by, for example, not giving notification of the given information or by giving notification of another information).

Judgement may be made based on a value (0 or 1) expressed as 1 bit, may be made based on a boolean expressed as true or false or may be made by comparing numerical values (by, for example, making comparison with a given value).

Irrespectively of whether software is referred to as software, firmware, middleware, a microcode or a hardware description language or is referred to as other names, the software should be widely interpreted to mean a command, a command set, a code, a code segment, a program code, a program, a subprogram, a software module, an application, a software application, a software package, a routine, a subroutine, an object, an executable file, an execution thread, a procedure or a function.

Furthermore, software, commands and information may be transmitted and received via transmission media. When, for example, the software is transmitted from websites, servers or other remote sources by using at least ones of wired techniques (e.g., coaxial cables, optical fiber cables, twisted pairs and Digital Subscriber Lines (DSLs)) and radio techniques (e.g., infrared rays and microwaves), at least ones of these wired techniques and radio techniques are included in a definition of the transmission media.

The terms "system" and "network" used in the present disclosure can be interchangeably used. The "network" may mean an apparatus (e.g., base station) included in the network.

In the present disclosure, terms such as "precoding", a "precoder", a "weight (precoding weight)", "Quasi-Co-Location (QCL)", a "Transmission Configuration Indication state (TCI state)", a "spatial relation", a "spatial domain filter", "transmission power", "phase rotation", an "antenna port", an "antenna port group", a "layer", "the number of layers", a "rank", a "resource", a "resource set", a "resource group", a "beam", a "beam width", a "beam angle", an "antenna", an "antenna element" and a "panel" can be interchangeably used.

In the present disclosure, terms such as a "Base Station (BS)", a "radio base station", a "fixed station", a "NodeB", an "eNodeB (eNB)", a "gNodeB (gNB)", an "access point", a "Transmission Point (TP)", a "Reception Point (RP)", a "Transmission/Reception Point (TRP)", a "panel", a "cell", a "sector", a "cell group", a "carrier" and a "component carrier" can be interchangeably used. The base station is also referred to as terms such as a macro cell, a small cell, a femtocell or a picocell.

The base station can accommodate one or a plurality of (e.g., three) cells. When the base station accommodates a plurality of cells, an entire coverage area of the base station can be partitioned into a plurality of smaller areas. Each smaller area can also provide a communication service via a base station subsystem (e.g., indoor small base station (Remote Radio Head (RRH))). The term "cell" or "sector" indicates part or the entirety of the coverage area of at least one of the base station and the base station subsystem that provide a communication service in this coverage.

In the present disclosure, the terms such as "Mobile Station (MS)", "user terminal", "user apparatus (UE: User Equipment)" and "terminal" can be interchangeably used.

The mobile station is also referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client or some other appropriate terms in some cases.

At least one of the base station and the mobile station may be referred to as, for example, a transmission apparatus, a reception apparatus or a radio communication apparatus. In addition, at least one of the base station and the mobile station may be, for example, a device mounted on a moving object or the moving object itself. The moving object may be a vehicle (e.g., a car or an airplane), may be a moving object (e.g., a drone or a self-driving car) that moves unmanned or may be a robot (a manned type or an unmanned type). In addition, at least one of the base station and the mobile station includes an apparatus, too, that does not necessarily move during a communication operation. For example, at least one of the base station and the mobile station may be an Internet of Things (IoT) device such as a sensor.

Furthermore, the base station in the present disclosure may be read as the user terminal. For example, each aspect/embodiment of the present disclosure may be applied to a configuration where communication between the base station and the user terminal is replaced with communication between a plurality of user terminals (that may be referred to as, for example, Device-to-Device (D2D) or Vehicle-to-Everything (V2X)). In this case, the user terminal 20 may be configured to include the functions of the above-described base station 10. Furthermore, words such as "uplink" and "downlink" may be read as a word (e.g., a "side") that matches terminal-to-terminal communication. For example, the uplink channel and the downlink channel may be read as side channels.

Similarly, the user terminal in the present disclosure may be read as the base station. In this case, the base station 10 may be configured to include the functions of the above-described user terminal 20.

In the present disclosure, operations performed by the base station are performed by an upper node of this base station depending on cases. Obviously, in a network including one or a plurality of network nodes including the base stations, various operations performed to communicate with a terminal can be performed by base stations, one or more network nodes (that are regarded as, for example, Mobility Management Entities (MMEs) or Serving-Gateways (S-GWs), yet are not limited to these) other than the base stations or a combination of these.

Each aspect/embodiment described in the present disclosure may be used alone, may be used in combination or may be switched and used when carried out. Furthermore, orders of the processing procedures, the sequences and the flowchart according to each aspect/embodiment described in the present disclosure may be rearranged unless contradictions arise. For example, the method described in the present disclosure presents various step elements by using an exemplary order and is not limited to the presented specific order.

Each aspect/embodiment described in the present disclosure may be applied to Long Term Evolution (LTE), LTE-Advanced (LTE-A), LTE-Beyond (LTE-B), SUPER 3G, IMT-Advanced, the 4th generation mobile communication system (4G), the 5th generation mobile communication system (5G), Future Radio Access (FRA), the New-Radio Access Technology (RAT), New Radio (NR), New radio access (NX), Future generation radio access (FX), the Global System for Mobile communications (GSM (registered trademark)), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other appropriate radio communication methods, or next-generation systems that are enhanced based on these systems. Furthermore, a plurality of systems may be combined (for example, LTE or LTE-A and 5G may be combined) and applied.

The phrase "based on" used in the present disclosure does not mean "based only on" unless specified otherwise. In other words, the phrase "based on" means both of "based only on" and "based at least on".

Every reference to elements that use names such as "first" and "second" used in the present disclosure does not generally limit the quantity or the order of these elements. These names can be used in the present disclosure as a convenient method for distinguishing between two or more elements. Hence, the reference to the first and second elements does not mean that only two elements can be employed or the first element should precede the second element in some way.

The term "deciding (determining)" used in the present disclosure includes diverse operations in some cases. For example, "deciding (determining)" may be considered to "decide (determine)" judging, calculating, computing, processing, deriving, investigating, looking up, search and inquiry (e.g., looking up in a table, a database or another data structure), and ascertaining.

Furthermore, "deciding (determining)" may be considered to "decide (determine)" receiving (e.g., receiving information), transmitting (e.g., transmitting information), input, output and accessing (e.g., accessing data in a memory).

Furthermore, "deciding (determining)" may be considered to "decide (determine)" resolving, selecting, choosing, establishing and comparing. That is, "deciding (determining)" may be considered to "decide (determine)" some operation.

Furthermore, "deciding (determining)" may be read as "assuming", "expecting" and "considering".

"Maximum transmit power" disclosed in the present disclosure may mean a maximum value of transmit power, may mean the nominal UE maximum transmit power, or may mean the rated UE maximum transmit power.

The words "connected" and "coupled" used in the present disclosure or every modification of these words can mean every direct or indirect connection or coupling between 2 or more elements, and can include that 1 or more intermediate elements exist between the two elements "connected" or "coupled" with each other. The elements may be coupled or connected physically or logically or by a combination of these physical and logical connections. For example, "connection" may be read as "access".

It can be understood in the present disclosure that, when connected, the two elements are "connected" or "coupled" with each other by using 1 or more electric wires, cables or printed electrical connection, and by using electromagnetic energy having wavelengths in radio frequency domains, microwave domains or (both of visible and invisible) light domains in some non-restrictive and non-comprehensive examples.

A sentence that "A and B are different" in the present disclosure may mean that "A and B are different from each other". In this regard, the sentence may mean that "A and B are each different from C". Words such as "separate" and "coupled" may be also interpreted in a similar way to "different".

In a case where the words "include" and "including" and modifications of these words are used in the present disclosure, these words intend to be comprehensive similar to the word "comprising". Furthermore, the word "or" used in the present disclosure intends to not be an exclusive OR.

In a case where, for example, translation adds articles such as a, an and the in English in the present disclosure, the present disclosure may include that nouns coming after these articles are plural.

The invention according to the present disclosure has been described in detail above. However, it is obvious for a person skilled in the art that the invention according to the present disclosure is not limited to the embodiments described in the present disclosure. The invention according to the present disclosure can be carried out as modified and changed aspects without departing from the scope of the invention defined based on the recitation of the claims. Accordingly, the description of the present disclosure is intended for exemplary explanation, and does not bring any restrictive meaning to the invention according to the present disclosure.

## Claims

1. A terminal (20) comprising:
a transmitting section (220) configured to transmit capability information including at least one of:
a first Radio Resource Control, RRC, parameter indicating whether or not to support a full power transmission,
a second RRC parameter indicating whether or not to support a full power transmission mode 1, in which all antenna ports are used for full power transmission, and
a third RRC parameter indicating whether or not to support a full power transmission mode 2, in which part of the antenna ports is used for full power transmission; and
a control section (210) configured to control a transmission of an uplink shared channel using at least one of the full power transmission, the full power transmission mode 1, and the full power transmission mode 2,
**characterized in that** when the full power transmission mode 1 or the full power transmission mode 2 is supported, then the transmitting section (220) transmits, instead of the first RRC parameter, capability information including:
the second RRC parameter corresponding to the full power transmission mode 1 that is supported, or
the third RRC parameter corresponding to the full power transmission mode 2 that is supported.

2. The terminal (20) according to claim 1, wherein the third RRC parameter includes a bitmap indicating a transmitted precoding matrix indicator, TPMI, which indicates that a UE can perform a full power transmission using the part of antenna ports for 2-port transmission.

3. The terminal (20) according to claim 1 or 2, wherein the third RRC parameter indicates a transmitted precoding matrix indicator, TPMI, which indicates that a non-coherent UE can perform a full power transmission using the part of the antenna ports for 4-port transmission.

4. The terminal (20) according to any one of claims 1 to 3, wherein the third RRC parameter indicates a transmitted precoding matrix indicator, TPMI, which indicates that a partial-coherent UE can perform a full power transmission using the part of the antenna ports for 4-port transmission.

5. The terminal (20) according to any one of claims 1 to 4, wherein the third RRC parameter indicates a transmitted precoding matrix indicator, TPMI, which indicates that a fully-coherent UE can perform a full power transmission using the part of the antenna ports for 4-port transmission.

6. A radio communication method for a terminal (20), comprising:
transmitting capability information including at least of:
a first Radio Resource Control, RRC, parameter indicating whether or not to support a full power transmission,
a second RRC parameter indicating whether or not to support a full power transmission mode 1, in which all antenna ports are used for full power transmission, and
a third RRC parameter indicating whether or not to support a full power transmission mode 2, in which part of the antenna ports is used for full power transmission; and
controlling a transmission of an uplink shared channel using at least one of the full power transmission, the full power transmission mode 1, and the full power transmission mode 2,
**characterized in that** when the full power transmission mode 1 or the full power transmission mode 2 is supported, then capability information is transmitted instead of the first RRC parameter, the capability information including:
the second RRC parameter corresponding to the full power transmission mode 1 that is supported, or
the third RRC parameter corresponding to the full power transmission mode 2 that is supported.

7. A base station (10) comprising:
a receiving section (120) configured to receive capability information including at least one of:
a first Radio Resource Control, RRC, parameter indicating whether or not to support a full power transmission,
a second RRC parameter indicating whether or not to support a full power transmission mode 1, in which all antenna ports are used for full power transmission, and
a third RRC parameter indicating whether or not to support a full power transmission mode 2, in which part of the antenna ports is used for full power transmission; and
a control section (110) configured to control a reception of an uplink shared channel transmitted from a terminal (20) using at least one of the full power transmission, the full power transmission mode 1, and the full power transmission mode 2,
**characterized in that** when the full power transmission mode 1 or the full power transmission mode 2 is supported, then the receiving section (120) receives, instead of the first RRC parameter, capability information including:
the second RRC parameter corresponding to the full power transmission mode 1 that is supported, or
the third RRC parameter corresponding to the full power transmission mode 2 that is supported.

8. A system (1) comprising a terminal (20) according to any one of claims 1 to 5 and a base station (10), wherein
the base station (10) comprises:
a receiving section (120) configured to receive the capability information; and
a control section (110) configured to control a reception of the uplink shared channel.

## Patentansprüche

1. Endgerät (20), umfassend:
einen Übertragungsabschnitt (220), der so konfiguriert ist, dass er Fähigkeitsinformationen überträgt, die mindestens eines einschließen von:
einen ersten Funkressourcensteuerungs-, RRC-, Parameter, der anzeigt, ob eine Vollleistungsübertragung unterstützt werden soll oder nicht,
einen zweiten RRC-Parameter, der anzeigt, ob ein Vollleistungsübertragungsmodus 1 unterstützt werden soll oder nicht, bei dem alle Antennenanschlüsse für eine Vollleistungsübertragung verwendet werden, und
einen dritten RRC-Parameter, der anzeigt, ob ein Vollleistungsübertragungsmodus 2 unterstützt werden soll oder nicht, bei dem ein Teil der Antennenanschlüsse für eine Vollleistungsübertragung verwendet wird; und
einen Steuerabschnitt (210), der so konfiguriert ist, dass er eine Übertragung eines gemeinsam genutzten Aufwärtsverbindungskanals steuert, wobei er mindestens eines von der Vollleistungsübertragung, dem Vollleistungsübertragungsmodus 1 und dem Vollleistungsübertragungsmodus 2 verwendet, **dadurch gekennzeichnet, dass**, wenn der Vollleistungsübertragungsmodus 1 oder der Vollleistungsübertragungsmodus 2 unterstützt wird, dann der Übertragungsabschnitt (220) anstelle des ersten RRC-Parameters Fähigkeitsinformationen überträgt, die einschließen:
den zweiten RRC-Parameter, der dem Vollleistungsübertragungsmodus 1 entspricht, der unterstützt wird, oder
den dritten RRC-Parameter, der dem Vollleistungsübertragungsmodus 2 entspricht, der unterstützt wird.

2. Endgerät (20) nach Anspruch 1, wobei der dritte RRC-Parameter eine Bitmap einschließt, die einen übertragenen Vorcodierungsmatrixindikator, TPMI, anzeigt, der anzeigt, dass eine UE eine Vollleistungsübertragung unter Verwendung des Teils der Antennenanschlüsse für eine 2-Anschluss-Übertragung durchführen kann.

3. Endgerät (20) nach Anspruch 1 oder 2, wobei der dritte RRC-Parameter einen übertragenen Vorcodierungsmatrixindikator, TPMI, anzeigt, der anzeigt, dass eine nicht-kohärente UE eine Vollleistungsübertragung unter Verwendung des Teils der Antennenanschlüsse für eine 4-Anschluss-Übertragung durchführen kann.

4. Endgerät (20) nach einem der Ansprüche 1 bis 3, wobei der dritte RRC-Parameter einen übertragenen Vorcodierungsmatrixindikator, TPMI, anzeigt, der anzeigt, dass eine teilkohärente UE eine Vollleistungsübertragung unter Verwendung des Teils der Antennenanschlüsse für eine 4-Anschluss-Übertragung durchführen kann.

5. Endgerät (20) nach einem der Ansprüche 1 bis 4, wobei der dritte RRC-Parameter einen übertragenen Vorcodierungsmatrixindikator, TPMI, anzeigt, der anzeigt, dass eine vollkohärente UE eine Vollleistungsübertragung unter Verwendung des Teils der Antennenanschlüsse für eine 4-Anschluss-Übertragung durchführen kann.

6. Funkkommunikationsverfahren für ein Endgerät (20), umfasssend:
Übertragen von Fähigkeitsinformationen, die mindestens einschließen:
einen ersten Funkressourcensteuerungs-, RRC, Parameter, der anzeigt, ob eine Vollleistungsübertragung unterstützt werden soll oder nicht,
einen zweiten RRC-Parameter, der anzeigt, ob ein Vollleistungsübertragungsmodus 1 unterstützt werden soll oder nicht, bei dem alle Antennenanschlüsse für eine Vollleistungsübertragung verwendet werden, und
einen dritten RRC-Parameter, der anzeigt, ob ein Vollleistungsübertragungsmodus 2 unterstützt werden soll oder nicht, bei dem ein Teil der Antennenanschlüsse für eine Vollleistungsübertragung verwendet wird; und
Steuern einer Übertragung eines gemeinsam genutzten Aufwärtsverbindungskanals unter Verwendung von mindestens einem von der Vollleistungsübertragung, dem Vollleistungsübertragungsmodus 1 und dem Vollleistungsübertragungsmodus 2, **dadurch gekennzeichnet, dass**, wenn der Vollleistungsübertragungsmodus 1 oder der Vollleistungsübertragungsmodus 2 unterstützt wird, dann Fähigkeitsinformationen anstelle des ersten RRC-Parameters übertragen werden, wobei die Fähigkeitsinformationen einschließen:
den zweiten RRC-Parameter, der dem Vollleistungsübertragungsmodus 1 entspricht, der unterstützt wird, oder
den dritten RRC-Parameter, der dem Vollleistungsübertragungsmodus 2 entspricht, der unterstützt wird.

7. Basisstation (10), umfasssend:
einen Empfangsabschnitt (120), der so konfiguriert ist, dass er Fähigkeitsinformationen empfängt, die mindestens eines einschließen von:
einen ersten Funkressourcensteuerungs-, RRC, Parameter, der anzeigt, ob eine Vollleistungsübertragung unterstützt werden soll oder nicht,
einen zweiten RRC-Parameter, der anzeigt, ob ein Vollleistungsübertragungsmodus 1 unterstützt werden soll oder nicht, bei dem alle Antennenanschlüsse für eine Vollleistungsübertragung verwendet werden, und
einen dritten RRC-Parameter, der anzeigt, ob ein Vollleistungsübertragungsmodus 2 unterstützt werden soll oder nicht, bei dem ein Teil der Antennenanschlüsse für eine Vollleistungsübertragung verwendet wird; und
einen Steuerabschnitt (110), der so konfiguriert ist, dass er einen Empfang eines gemeinsam genutzten Aufwärtsverbindungskanals steuert, der von einem Endgerät (20) übertragen wird, unter Verwendung von mindestens einem von der Vollleistungsübertragung, dem Vollleistungsübertragungsmodus 1 und dem Vollleistungsübertragungsmodus 2, **dadurch gekennzeichnet, dass**
wenn der Vollleistungsübertragungsmodus 1 oder der Vollleistungsübertragungsmodus 2 unterstützt wird, dann der Empfangsabschnitt (120) anstelle des ersten RRC-Parameters Fähigkeitsinformationen empfängt, die einschließen:
den zweiten RRC-Parameter, der dem Vollleistungsübertragungsmodus 1 entspricht, der unterstützt wird, oder
den dritten RRC-Parameter, der dem Vollleistungsübertragungsmodus 2 entspricht, der unterstützt wird.

8. System (1), das ein Endgerät (20) nach einem der Ansprüche 1 bis 5 und eine Basisstation (10) umfasst, wobei die Basisstation (10) umfasst:
einen Empfangsabschnitt (120), der so konfiguriert ist, dass er die Fähigkeitsinformationen empfängt; und
einen Steuerabschnitt (110), der so konfiguriert ist, dass er einen Empfang des gemeinsam genutzten Aufwärtsverbindungskanals steuert.

## Revendications

1. Terminal (20) comprenant :
une section (220) de transmission configurée pour transmettre des informations de capacité incluant au moins :
un premier paramètre de commande de ressource radio, RRC, indiquant de prendre en charge ou non une pleine transmission de puissance,
un deuxième paramètre RRC indiquant de prendre en charge ou non un mode 1 de pleine transmission de puissance, dans lequel tous les ports d'antennes sont utilisés pour une pleine transmission de puissance, et
un troisième paramètre RRC indiquant de prendre en charge ou non un mode 2 de pleine transmission de puissance, dans lequel une partie des ports d'antennes sont utilisés pour une pleine transmission de puissance ; et
une section (210) de commande configurée pour commander une transmission d'un canal partagé de liaison montante utilisant au moins une de la pleine transmission de puissance, le mode 1 de pleine transmission de puissance, et le mode 2 de pleine transmission de puissance,
**caractérisé en ce que** lorsque
le mode 1 de pleine transmission de puissance ou le mode 2 de pleine transmission de puissance est pris en charge, alors la section (220) de transmission transmet, au lieu du premier paramètre RRC, des informations de capacité incluant :
le deuxième paramètre RRC correspondant au mode 1 de pleine transmission de puissance qui est pris en charge, ou
le troisième paramètre RRC correspondant au mode 2 de pleine transmission de puissance qui est pris en charge.

2. Terminal (20) selon la revendication 1, dans lequel le troisième paramètre RRC inclut une bitmap indiquant un indicateur de matrice de précodage, TPMI, transmis qui indique qu'un UE peut réaliser une pleine transmission de puissance en utilisant la partie des ports d'antennes pour une transmission sur 2 ports.

3. Terminal (20) selon la revendication 1 ou la revendication 2, dans lequel le troisième paramètre RRC indique un indicateur de matrice de précodage, TPMI, transmis qui indique qu'un UE non cohérent peut réaliser une pleine transmission de puissance en utilisant la partie des ports d'antennes pour une transmission sur 4 ports.

4. Terminal (20) selon l'une quelconque des revendications 1 à 3, dans lequel le troisième paramètre RRC indique un indicateur de matrice de précodage, TPMI, transmis qui indique qu'un UE partiellement cohérent peut réaliser une pleine transmission de puissance en utilisant la partie des ports d'antennes pour une transmission sur 4 ports.

5. Terminal (20) selon l'une quelconque des revendications 1 à 4, dans lequel le troisième paramètre RRC indique un indicateur de matrice de précodage, TPMI, transmis qui indique qu'un UE pleinement cohérent peut réaliser une pleine transmission de puissance en utilisant la partie des ports d'antennes pour une transmission sur 4 ports.

6. Procédé de communication radio pour un terminal (20), comprenant :
la transmission des informations de capacité incluant au moins :
un premier paramètre de commande de ressource radio, RRC, indiquant de prendre en charge ou non une pleine transmission de puissance,
un deuxième paramètre RRC indiquant de prendre en charge ou non un mode 1 de pleine transmission de puissance, dans lequel tous les ports d'antennes sont utilisés pour une pleine transmission de puissance, et
un troisième paramètre RRC indiquant de prendre en charge ou non un mode 2 de pleine transmission de puissance, dans lequel une partie des ports d'antennes sont utilisés pour une pleine transmission de puissance ; et
une commande d'une transmission d'un canal partagé de liaison montante utilisant au moins une des pleines transmissions de puissance, le mode 1 de pleine transmission de puissance, et le mode 2 de pleine transmission de puissance,
**caractérisé en ce que** lorsque
le mode 1 de pleine transmission de puissance ou le mode 2 de pleine transmission de puissance est pris en charge, alors les informations de capacité sont transmises au lieu du premier paramètre RRC, les informations de capacité incluant :
le deuxième paramètre RRC correspondant au mode 1 de pleine transmission de puissance qui est pris en charge, ou
le troisième paramètre RRC correspondant au mode 2 de pleine transmission de puissance qui est pris en charge.

7. Station (10) de base comprenant :
une section (120) de réception configurée pour recevoir des informations de capacité incluant au moins :
un premier paramètre de commande de ressource radio, RRC, indiquant de prendre en charge ou non une pleine transmission de puissance,
un deuxième paramètre RRC indiquant de prendre en charge ou non un mode 1 de pleine transmission de puissance, dans lequel tous les ports d'antennes sont utilisés pour une pleine transmission de puissance, et
un troisième paramètre RRC indiquant de prendre en charge ou non un mode 2 de pleine transmission de puissance, dans lequel une partie des ports d'antennes sont utilisés pour une pleine transmission de puissance ; et
une section (110) de commande configurée pour commander une réception d'un canal partagé de liaison montante transmis à partir d'un terminal (20) utilisant au moins une des pleines transmissions de puissance, le mode 1 de pleine transmission de puissance, et le mode 2 de pleine transmission de puissance,
**caractérisé en ce que** lorsque
le mode 1 de pleine transmission de puissance ou le mode 2 de pleine transmission de puissance est pris en charge, alors la section (120) de réception reçoit, au lieu du premier paramètre RRC, des informations de capacité incluant :
le deuxième paramètre RRC correspondant au mode 1 de pleine transmission de puissance qui est pris en charge, ou
le troisième paramètre RRC correspondant au mode 2 de pleine transmission de puissance qui est pris en charge.

8. Système (1) comprenant un terminal (20) selon l'une quelconque des revendications 1 à 5 et une station (10) de base, dans lequel la station (10) de base comprend :
une section (120) de réception configurée pour recevoir les informations de capacité ; et
une section (110) de commande configurée pour commander une réception du canal partagé de liaison montante.
